# EUROPEAN PATENT SPECIFICATION

(11) **EP 1 227 660 B1**
(45) Date of publication and mention of the grant of the patent: **23.03.2011**
(21) Application number: 02001107.8
(22) Date of filing: 23.01.2002
(51) Int. Cl.: H04N 1/64

(54) **Method for transmitting an information on an image and information generating unit**
Verfahren zur Bildinformationsübertragung und Informationserzeugungsvorrichtung
Procédé de transmission d'information d'une image et appareil de production d'information

(30) Priority: 23.01.2001 JP 2001015046
(43) Date of publication of application: 31.07.2002
(73) Proprietor: MINOLTA CO., LTD., Osaka-Shi, Osaka 541-8556 (JP)
(72) Inventor: Yuasa, Yoshio, Minolta Co., Ltd., Chuo-ku, Osaka-shi, Osaka (JP); Morimoto, Teruo, Minolta Co., Ltd., Chuo-ku, Osaka-shi, Osaka (JP); Nakamuro, Masao, Minolta Co., Ltd., Chuo-ku, Osaka-shi, Osaka (JP); Naruse, Kazuhiko, Minolta Co., Ltd., Chuo-ku, Osaka-shi, Osaka (JP); Kobayashi, Toru, Minolta Co., Ltd., Chuo-ku, Osaka-shi, Osaka (JP)
(74) Representative: HOFFMANN EITLE

(56) References cited:
- US-A- 5 579 031
- US-A- 5 973 801
- L W MACDONALD: "Assessment of monitor calibration for Internet imaging" SPIE, vol. 3964, January 2000 (2000-01), pages 162-167, XP002330262
- ROBERT W G HUNT: "How to Shop on the Web Without Seeing Red" IS&T/SID COLOR IMAGING CONFERENCE, November 2000 (2000-11), pages 2-7, XP002183331

## Description

This invention relates to a method for transmitting or inputting an electronic data of an image generated by one image information generating unit to an other image information output unit, particularly to an image information transmitting method capable of causing colors intended by a creator to be reproduced in an image information output unit when an image created by an image information generating unit is outputted in an image information output unit, an image information generating unit, an image information output unit, an image information generating program and an image information output program adopting this image information transmitting method, a storage medium storing these programs, and an image information transmission system.

In the case that an image is outputted in an output unit such as a CRT (cathode ray tube) or a printer, colors of the output image normally differ depending on the type of the output unit and output characteristics even if the data of the image is identical. In view of this, a technique of making an image data independent of a device such as an image pickup device or a reproducing device, i.e., making colors of an image so-called device-independent colors has been proposed in order to enable reproduction of identical colors independent of the image pickup device such as a digital or electronic camera or the reproducing device such as a printer or a display when an image is reproduced as a visible image. This technique is designed to format an image data (for example, RGB image data in the case that the reproducing device is a CRT) used to display an image on the reproducing device into an image file by attaching it with a color definition data (for example, color definition data for conversion into color measurement values in the XYZ color space or L*a*b color space based on the CIE (Commission Internationale d'Eclairage) for relating an image data to a device-independent color measurement value.

Japanese Patent Publication No. 2906899 discloses a color coinciding method in color information transmission between an input unit and an output unit in a system in which one or more input units and one or more output units are connectable with each other. This patent publication discloses a technique of temporarily converting an image data received by the output unit into a data in a standard color space (for example, XYZ data) based on a color correction data and then converting the data in the standard color space into an image data (for example, CMYK data in the case of a printer) which can be outputted in the output unit when the image data transmitted from the input device to the output unit is not a data in the standard color space, but is attached with the color correction data for converting the image data into a data in the standard color space.

Further, Japanese Unexamined Patent Publication No. 2000-20681 discloses a method for, in a system in which one or more client-side personal computers (hereinafter, "client-side PCs") and a color calibrating device for applying a color calibration to display devices of the respective client-side PCs are connected via a network, applying a color calibration to the respective client-side PCs lest display colors should be different among the client-side PCs when the same color is outputted in the client-side PCs. According to this color calibration method, a reference color data stored in the color calibrating device is transmitted to the client-side PC upon a request from this client-side PC; a reference color is displayed on the display device using the received reference color data, the display color is measured by a colorimeter and a color measurement data is transmitted back to the color calibrating device in the client-side PC; and a color calibration data of the client-side PC is generated using the color measurement data in the color calibrating device and transmitted to the client-side PC.

In recent years, businesses using the Internet have been rapidly growing. Such Internet-businesses usually work such that sellers provide purchasers with character information and image information relating to goods and the purchasers output (visualize) the image information of goods using output units such as CRTs and printers and select desired goods by viewing the outputted images. Thus, it is desirable that colors of the goods visualized at the purchasers' end coincide with those of the goods offered by the sellers. Therefore, there has been a demand for a transmission technique of coinciding colors created at a transmission side with those reproduced at a receiving side also in an image information transmission.

However, as described above, it is difficult to precisely reproduce colors intended by an image creator at a receiving-side PC due to differences in display characteristics between a display of the transmitting-side PC and that of the receiving-side PC in the case that an image data (RGB data) created at one PC is transmitted to an other PC at a remote place and the received image is displayed on the display of the receiving-side PC, these PCs being so connected as to enable a communication therebetween.

The above known technique of formatting the image data an device-independent color image file is adapted to attach the color definition data for converting the image data into color value data in the XYZ color space to the image data such as RGB data to be outputted from the output unit, but not to attach a data obtained by directly measuring the output color of the image data to it. Accordingly, with this technique, it is impossible to confirm whether or not the colors of the image outputted from the receiving-side output unit coincide with those (colors actually created when he created an image) intended by the image creator even if the image data is converted into the color value data independent of the output unit at the side having received the image file and then the color value data is converted into an image data to be outputted from the output unit of the receiving side.

Further, the color coinciding method disclosed in Japanese Patent Publication No. 2906899 is basically identical to the aforementioned color coinciding method using device-independent colors since it is adapted to transmit the image data such as RGB data to be outputted from the output unit from the transmitting side while attaching it with the correction data for converting the image data into the image data in the standard color space such as the XYZ color space.

Hence, it is difficult to confirm whether or not the colors intended by the image creator at the transmitting side are precisely reproduced at the receiving-side PC according to the conventional method using the device-independent color image file and the method disclosed in Japanese Patent Publication No. 2906899.

On the other hand, according to the color adjusting method disclosed in Japanese Unexamined Patent Publication No. 2000-20681, the reference color is displayed on the client-side PC, the displayed color is actually measured by the colorimeter, and color calibration is applied lest colors should be different among the client-side PCs using the actual measurement data. This method is a color calibration method in accordance with a conversion table (profile) based on the device characteristics and is incapable of confirming whether or not colors were precisely reproduced.

US 5, 973, 801 relates to a method for automatically matching the color of a printed representation of an object or swatch to that of the object or swatch itself. The method includes the steps of measuring the colors of the object with a colorimeter.

It is an object of the present invention to provide an image information transmitting method, an image information generating unit, an image information output unit, an image information generating program, an image information output program, a storage medium, and an image information transmission system which are free from the problems residing in the prior art.

The object of the invention and corresponding advantages are achieved by the subject matter of the independent claims. Further advantages are achieved by the subject matter of the dependent claims.

Examples are provided for facilitating the understanding of the invention.

Colors of an image outputted from an image output unit is enabled to coincide with those intended by a creator at a side of an image generating unit in a system for transmitting or inputting an electronic data of an image generated by an image generating unit to an image output unit.

These and other objects, features, aspects, and advantages of the present invention will become more apparent from the following detailed description of the preferred
embodiments/examples with reference to the accompanying drawings, in which:
FIG. 1 is a diagram showing an image information transmitting method according to an embodiment of the invention;
FIG. 2 is a diagram showing a basic construction of an image information transmission system of the embodiment;
FIG. 3 is a block construction diagram showing an image information generating unit fulfilling an image file generating function of the embodiment;
FIG. 4 is a flowchart showing a procedure of an image file generation process;
FIG. 5 is a diagram showing contents of an image file in the case that a color value data is obtained for each area within an image;
FIG. 6 is a diagram showing contents of an image file in the case that an image data is generated in vector format;
FIG. 7 is a diagram showing contents of an image file in the case that a color value data is obtained, if necessary, for all pixel positions;
FIG. 8 is a block construction diagram showing another image information generating unit fulfilling the image file generating function;
FIG. 9 is a flowchart showing a procedure of an image file generation process carried out in the image information generating unit according to a second embodiment;
FIG. 10 is a diagram showing a color measuring method by a colorimeter in the second embodiment;
FIG. 11 is a block construction diagram showing yet another image information generating unit fulfilling the image file generating function;
FIG. 12 is a block construction diagram showing a further image information generating unit fulfilling the image file generating function;
FIG. 13 is a block construction diagram showing still further image information generating unit fulfilling the image file generating function;
FIG. 14 is a diagram showing a data configuration of an image file in which a surface-state data is attached to an image data in addition to a color value data;
FIG. 15 is a diagram showing a data configuration of an image file in which an output medium information data is attached to the image data in addition to the color value data;
FIG. 16 is a block construction diagram showing an image information output unit fulfilling an image file outputting function of the embodiment;
FIG. 17 is a flowchart showing a procedure of correcting a display variation on a display;
FIG. 18 is a flowchart showing a specific procedure of a routine "Image Reproduction";
FIG. 19 is a block construction diagram showing another image information output unit fulfilling the image file outputting function;
FIG. 20 is a diagram showing a construction example of an image information transmission system adopting the inventive image information transmitting method for transmitting an image information between an image information sender and a specified image information recipient;
FIG. 21 is a diagram showing a construction example of an image information transmission system adopting the inventive image information transmitting method for transmitting an image information between an image information sender and unspecified image information recipients;
FIGS. 22A and 22B are flowcharts combinedly showing a procedure of an image information transmission process in the image information transmission system shown in FIGS. 20 or 21;
FIGS. 23A and 23B are flowcharts combinedly showing another procedure of the image information transmission process in the image information transmission system shown in FIGS. 20 or 21;
FIGS. 24A AND 24B is a flowchart showing still another procedure of the image information transmission process in the image information transmission system shown in FIGS. 20 or 21; and
FIGS. 25A AND 25B is a flowchart showing yet still another procedure of the image information transmission process in the image information transmission system shown in FIGS. 20 or 21.

An image information transmitting method according to an embodiment of the present invention is adapted to enable colors of an image G to coincide with colors created by an creator A when the image G created by the creator A is offered to a third person B after being converted into an electronic data (hereinafter, this data is referred to as an image data) and the third person B reproduces the image G by means of an image output unit such as a CRT or a printer using the received image data. It should be noted that the colors of the image in the present invention include both chromatic colors and achromatic colors.

Generally, there are roughly two methods for offering the image data of the image G created by the creator A to a third person B: 1) the creator A offers the image data to the third person by storing it in an optical disk, a photomagnetic disk, or like computer-readable storage medium, and 2) the creator A and the third person B both possess computers, which are so connected with each other as to enable a communication therebetween via a communication circuit or a network and the creator A transmits the image data to the computer of the third person B. The image information transmitting method according to the present invention embraces both methods.

In the following description, an example of the latter case in which the creator A generates the image G using his own computer and the third person B reproduces the image data of the image G received from the creator A via a computer communication on a display of his own computer is described for the sake of convenience.

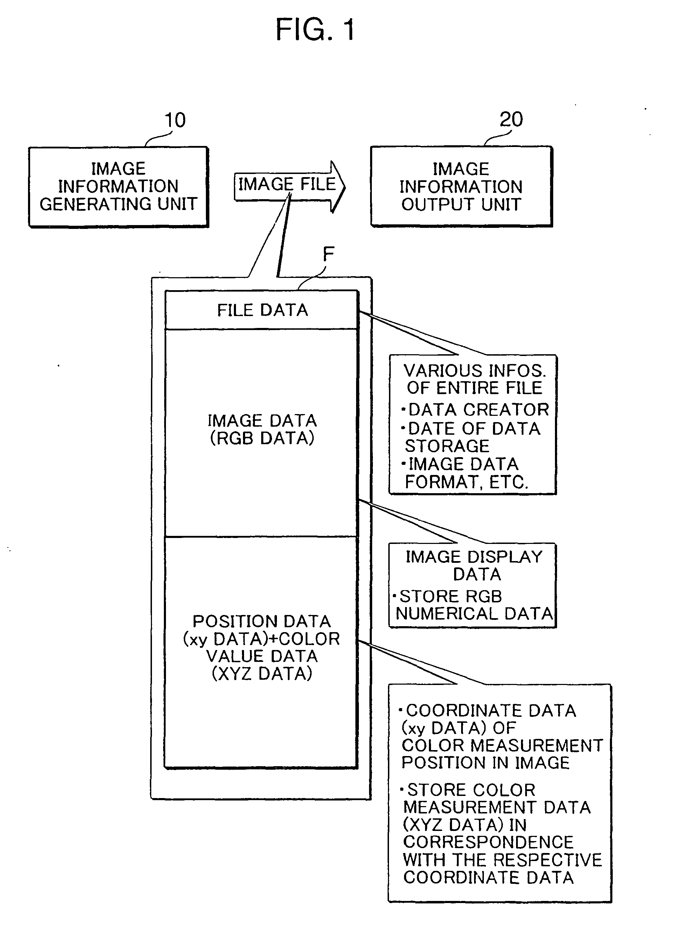

FIG. 1 is a diagram showing an image information transmitting method embodying the invention. In FIG. 1, an image information generating unit 10 is a computer used by the creator A to generate the image G, and the image information output unit 20 is a computer used by the third person B to output the image data of the image G received from the creator A via a communication on the display. The image information generating unit 10 and the image information output unit 20 can transmit and receive image files by a known data communication method.

Thus, the creator A generates the image G using the image information generating unit 10 and transmits an image data relating to this image G to the image output unit 10 of the third person B after converting it into an image file of a specified format.

According to the image information transmitting method, an image file to be transmitted from the creator A to the third person B is, as shown in an image file F of FIG. 1, comprised of an image data (RGB image data) used to output the image G on a display of an image generating unit 1, a color value data (for example, color value data in a XYZ color space based on the CIE) obtained by actually measuring a displayed color by means of a colorimeter for at least one color of the image G displayed on the display, a data on a position in the image G where color measurement was conducted, and pieces of information (name of the creator, date of generation, title, image data format, image size, etc.) on the entire image file. The inventive image file is characterized in attaching the actually measured color value data and the color measurement position data to the image data.

Although data in the XYZ color space are used as color value data in this embodiment, data in an other measurable color space such as L*a*b color space, Hunter Lab color space or L*c*h color space may be, for example, used.

Upon receiving the image file F from the creator A, the third person B can display the image G on the display of the image information output unit 20 using image data (R1, G1, B1) in the image file F and thereby confirm the content of the received image G. If the image G is merely displayed, the colors of the image G displayed on the display of the image information output unit 20 do not coincide with those of the image G created by the creator A due to differences between the output characteristics of the display of the image information generating unit 10 and those of the display of the image information output unit 20. In other words, if (X1, Y1, Z1), (X2, Y2, Z2) are a color value of the color created by the creator A using the display of the image information generating unit 10 and a color value of the color reproduced by the third person B using the display of the image information output unit 20, (X1, Y1, Z1) ≠ (X2, Y2, Z2).

However, for at least one color C in the image G, the image file F is attached with a color value data (Xc1, Yc1, Zc1) of the color C and a measurement position data (xc, yc) of the color value in the image G for an image data (Rc1, Gc1, Bc1). Thus, the color value of the color C displayed on the display of the image information output unit 20 can substantially coincide with the color value of the color C created by the creator A by measuring the color C at the measurement position (xc, yc) of the image G displayed on the display of the image information output unit 20 by means of a colorimeter, comparing a color value data (Xc2, Yc2, Zc2) obtained by the measurement and the color value data (Xc1, Yc1, Zc1), and correcting the image data (Rc1, Bc1, Bc1) to display the color C such that an error between the two data is equal to or smaller than a predetermined threshold value set in advance.

Although color adjustment is made for at least one color C in the image G in the above description, the third person B having received the image file F can apply color adjustment for all colors in the image G or for the entire area of the image G if color value data (Xi, Yi, Zi)(i = 1, 2, ...) are attached for all colors in the image G or for the entire area of the image G.

Instead of separately storing the image data and (position data + color value data), the data configuration of the image file F may be such that the image data and the color value data are stored in pairs for the respective pixels. In such a case, there are pixel positions where no color value data is available. The image data are paired with dummy data for such pixel positions.

By enabling the third person B to visually confirm the colors (color values) intended by the creator A having created the image G at a remote place in this way, an information on the colors created by the creator A can be precisely transmitted to the third person B. This image file transmitting method is useful and effective in the following applications.
(1) In recent businesses using the Internet (electronic transaction), it is a usual practice to offer images of goods to clients and let the clients select the goods while viewing the images. For example, in the Internet businesses of the industries such as fashion industry in which color schemes and colors of goods are an important factor in selection, clients can confirm actual colors of the goods by offering the images of the goods to the clients in the form of the image files according to the present invention. As a result, troubles concerning the colors of the goods between the goods providers and the clients can be reduced, enabling smoother conclusion of the electronic transaction.
(2) It has become conventional to generate various images using computer graphics in recent years, and it is getting general to transmit and receive the generated images in the form of electronic data. For instance, various pieces of information are transmitted and received within the same company or between related companies using LAN (local area network). Under such circumstances, color actually created by a creator can be precisely transmitted to an other end and troubles concerning the color of the image between the creator and the receiving end can be reduced by formatting an image data to be transmitted into the image file according to the present invention. For example, at a section concerning product designs, the design of a product created by a designer can be precisely transmitted to an other end at a remote place, enabling a smooth business cooperation between the designer and the receiving end of the image data.

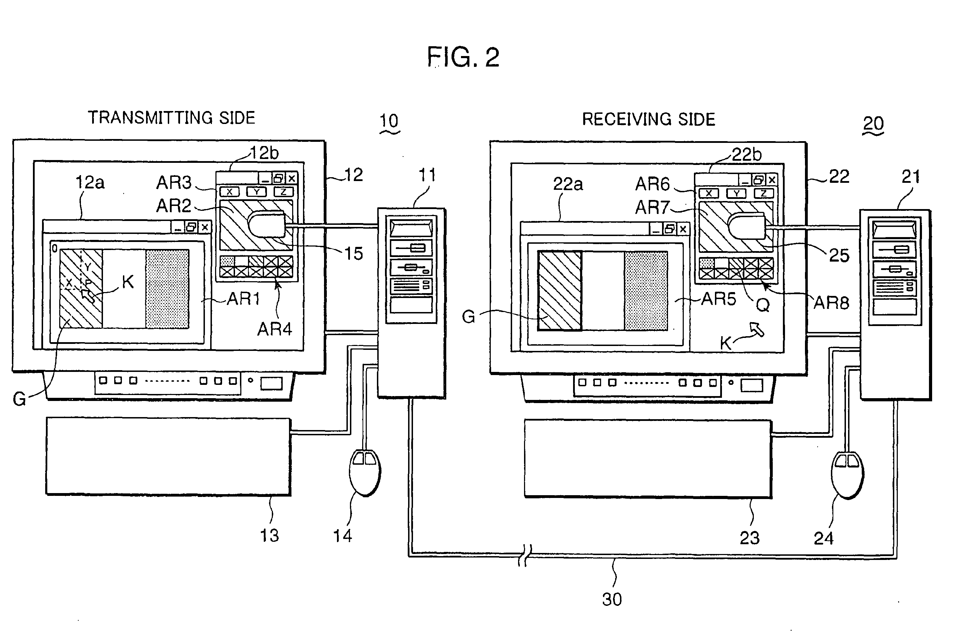

Next, an image information transmission system using the image information transmitting method according to the embodiment. FIG. 2 is a diagram showing a basic construction of the image information transmission system. In FIG. 2, the image information transmission system is comprised of the image information generating unit 10 for generating an image file of an image and transmitting the generated image file to the image information output unit 20, the image information output unit 20 for receiving the image file transmitted from the image information generating unit 10 and reproducing the image substantially in the same colors as the colors actually created by the image information generating unit 10, and a cable 30 connecting the devices 10, 20 to enable a communication therebetween.

Although the image information transmission system comprised of a pair of the image information generating unit 10 and the image information output unit 20 is shown in FIG. 2, the image information transmission system is not limited thereto. For example, it may be such that a plurality of image information output units 20 are connected with one image information generating unit 10 to enable a communication therebetween or such that a plurality of image information generating units 10 and a plurality of image information output units 20 are connected to enable a communication therebetween via a network.

Further, although the image information transmission system shown in FIG. 2 is a system for transmitting and receiving an image information by communication, it may be a system for transmitting an image information using an external storage medium such as a floppy disk.

The image information generating unit 10 is provided with a unit main body 11 for generating the image file, a display 12 for displaying pieces of information necessary to generate the image file, a keyboard 13 and a mouse 14 for inputting necessary pieces of information to the unit main body 11, and a colorimeter 15 for measuring the color displayed on the display 12. The unit main body 11, the display 12, the keyboard 13 and the mouse 14 are general elements of a computer, and the computer can function as an image information generating unit by installing a specified program for executing an image file generation process to be described later in the unit main body 11. Instead of installing the specified program in the general-purpose computer, the image information generating unit may be constructed as a special unit.

The display 12, the keyboard 13, the mouse 14 and the colorimeter 15 are connected with the unit main body 11. Further, the unit main body 11 is provided with a built-in external storage medium reader for reading an information stored in an external storage medium such as a floppy disk or a CD-ROM and, although not shown, an input terminal used to input an image information obtained by an image input device such as an electronic camera or a scanner.

Accordingly, in the image information generating unit 10, image data can be generated by creating images using a specified image generation software in the unit main body 11, by reading an image data stored in an external storage medium such as a CD-ROM by means of the external storage medium reader, and by connecting an image input device such as an electronic camera with the input terminal and transferring the image data from the image input device.

On the other hand, the image information output unit 20 is provided with a unit main body 21 for reproducing the image based on the image file F received from the image information generating unit 10, a display 22 for displaying an image necessary to reproduce the image based on the image file F, a keyboard 23 and a mouse 24 for inputting necessary pieces of information to the unit main body 21, and a colorimeter 25 for measuring the color displayed on the display 22. The unit main body 21, the display 22, the keyboard 23 and the mouse 24 are general elements of a computer, and the computer can function as an image information output unit by installing a specified program for executing an image file reproducing operation to be described later in the unit main body 21. Instead of installing the specified program in the general-purpose computer, the image information output unit may be constructed as a special unit.

The unit main body 21 is connected with the display 22, the keyboard 23, the mouse 24 and the colorimeter 25, and is connected with the unit main body 11 of the image information generating unit 10 via the cable 30 to enable a communication therebetween.

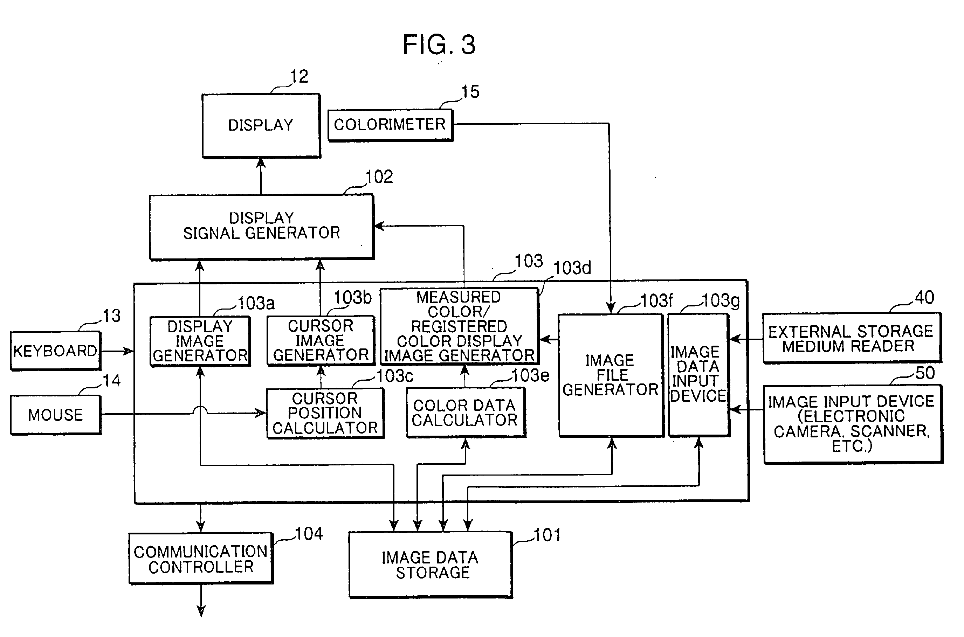

FIG. 3 is a block construction diagram showing a first image information generating unit 10 fulfilling an image file generating function according to the embodiment. In FIG. 3, elements having the same functions as those shown in FIG. 2 are identified by the same reference numerals.

An image data storage 101 is adapted to store an image data (RGB data to display an image on the display, corresponding to the first image data according to the embodiment) necessary in the image file generation process, an obtained position data (xy data representing a color measurement position or a color measurement area in xy coordinate systems defined in the image) and a color value data (CIE-based XYZ data actually measured by the colorimeter, corresponding to the second image data according to the embodiment) or an image file generated using these data.

A display signal generator 102 generates a drive signal used to cause a specified image to be displayed on the display 12 in order to carry out the image file generation process. This drive signal is inputted to the display 12, which displays a specified image for generation of the image file as shown in a display example of the image information generating unit 10 of FIG. 2 in accordance with this drive signal.

In the display example of FIG. 2, a dialogue display of an image viewer 12a for displaying the image G (image of a tricolor flag is shown as an example in FIG. 2), a display of a cursor K for designating the color measurement position or the color measurement area in the image G, a display of a color at the color measurement position designated by the cursor K in a specified size measurable by the colorimeter 15 (size measurable by the colorimeter 15 or larger), and a dialogue display of a registration palette 12b for displaying registration of the already measured colors in palette format are made on a display surface of the display 12. These displays are described in detail later.

A controller 103 is comprised of a CPU (central processing unit) and adapted to control the generation of the image file. The controller 103 is provided, as function blocks for performing the image file generation process, with a display image generator 103a, a cursor image generator 103b, a cursor position calculator 103c, a measured color/registered color display image generator 103d, a color value data calculator 103e, an image file generator 103f and an image data input device 103g.

The display image generator 103a generates an image of the image viewer 12a to be displayed on the display 12. The image viewer 12a has an image display area AR1 and the image G is displayed in this display area AR1 as shown in FIG. 2. A display size of the image G in the display area AR1 can be set at a desired size. When the image G is displayed in an enlarged manner, part of the image G is displayed in the display area AR1, and the other part thereof which is not displayed can be scroll-displayed using an unillustrated scroll key.

The display image generator 103a reads the image data designated for the generation of the image file from the image data storage 101 in accordance with a specified image viewer display software, generates the image of the image viewer 12a and outputs its image information to the display signal generator 102. It should be noted that a command for designating the generation of the image file F is inputted by an operator maneuvering the keyboard 13 or the mouse 14.

The cursor image generator 103b generates an image of the cursor K displayed on the display 12 and also generates an image of the cursor K movably displayed on the display screen of the display 12 based on a movement information of the cursor K on the display screen of the display 12 inputted from the cursor position calculator 103c. The information on the display image of the cursor K generated by the cursor image generator 103b is inputted to the display signal generator 102.

The cursor position calculator 103c calculates a display position or moving position of the cursor K on the display screen of the display 12 and xy coordinates of the color measurement position in the image G designated by the cursor K within the image G displayed in the image viewer 12a. The cursor position calculator 103c calculates the movement information of the cursor K on the display screen of the display 12 based on an operated direction and an operated amount inputted from the mouse 14, and outputs a calculation result to the cursor image generator 103b. The xy coordinate systems are defined as shown in the image G displayed in the image viewer 12a of FIG. 2, such that x-axis and y-axis, for example, extend to right and to down, respectively, with the left upper corner of the image G as an origin O. The cursor position calculator 103c calculates the xy coordinates of point P in the image G designated by the cursor K when the mouse 14 is double-clicked with the cursor K displayed on the image G in a superimposed manner. The data (x, y) of the color measurement position is outputted to the color value data calculator 103e.

The measured color/registered color display image generator 103d generates an image of the registration palette 12b displayed on the display 12. As shown in FIG. 2, the registration palette 12b has a display area AR2 in the middle for displaying the color to be measured, a display area AR3 above the display area AR2 for displaying the color value data (X, Y, Z) of the displayed color, and a display area AR4 below the display area AR2 for displaying the colors (hereinafter, "registered colors") stored in the image data storage 101 in palette format. Although ten colors can be displayed in the palette in FIG. 2, the number of the colors displayed in the palette is not restricted thereto. Alternatively, the number of the registered colors may be restricted according to the size of the display area AR4. All the registered colors may be simultaneously displayed in palette format in the display area AR4 or part of the registered colors may be scroll-displayed in the display area AR4 without restricting the number of the registered colors.

The measured color/registered color display image generator 103d generates an image of the registration palette 12b based on an image data (image data used to display a color to be measured) inputted from the color value data calculator 103e and the color value data of the registered color inputted from the image file generator 103f in accordance with a specified registration palette display software, and outputs its image information to the display signal generator 102.

The display signal generator 102 generates drive signals used to display the image data of the image viewer 12a, the registration palette 12b and the cursor K on the display 12 based on these image data inputted from the display image generator 103a, the cursor image generator 103b and the measured color/registered color display image generator 103d, and outputs these drive signals to the display 12.

The color value data calculator 103e calculates an image data (R_{x,y}, G_{x,y},B_{x,y}) of the image G corresponding to the position data (x, y) based on the data (x, y) of the color measurement position or the color measurement area inputted from the cursor position calculator 103c. Specifically, the color value data calculator 103e reads the image data (R, G, B) of the image G from the image data storage 101, calculates the image data (R_{x,y}, G_{x,y}, B_{x,y}) corresponding to the position data (x, y) based on the pixel positions of the respective image data (R, G, B) in the image G and the position data (x, y), and outputs the image data (R_{x,y}, G_{x,y}, B_{x,y}) to the measured color/registered color display image generator 103d. The color value data calculator 103e also outputs the position data (x, y) and the image data (R_{x,y}, G_{x,y}, B_{x,y}) to the image file generator 103f.

The image file generator 103f measures the color displayed in the display area AR2 of the registration palette 12b by means of the colorimeter 15, and generates an image file by attaching the color value data (x, Y, Z) obtained by the colorimeter 15 and the position data (x, y) of the color measurement to the image data (R, G, B) of the image G displayed in the image viewer 12a. The image file generator 103f drives the colorimeter 15 every time a color to be measured is displayed in the display area AR2 of the registration palette 12b to obtain the color value data (x, Y, Z) of the display color, and stores it in correspondence with the image data (R, G, B) and the position data (x, y) in the image data storage 101. When the end of the color measurement is instructed by operating the keyboard 13 or the mouse 14, the image file generator 103f generates a data on the image file (name of the creator, date of generation, title, image data format, image size, etc., which are referred to as "file data" hereinafter), generates the image file F shown in FIG. 1 by combining the file data, the image data (R, G, B) of the image G to be displayed on the display 22, the color value data (x, Y, Z) of the measured color, and the color measurement position data (x, y), and stores this image file F in the image storage 101.

The image data input device 103g is adapted to input the image data of the image G from an external storage medium reader 40 or an image input device 50. The external storage medium reader 40 reads the image file stored in an external storage medium such as a floppy disk or a CD-ROM as described above. The image input device 50 is an image input device such as an electronic camera, a video camera or a scanner. The image data input device 103g transfers and stores the image file read by the external storage medium reader 40 or the one inputted from the image input device 50 to and in the image data storage 101.

A communication controller 104 controls transmission of the image file F generated in the controller 103 to the image output unit 20 by communicating with the image output unit 20 connected therewith via the cable 30.

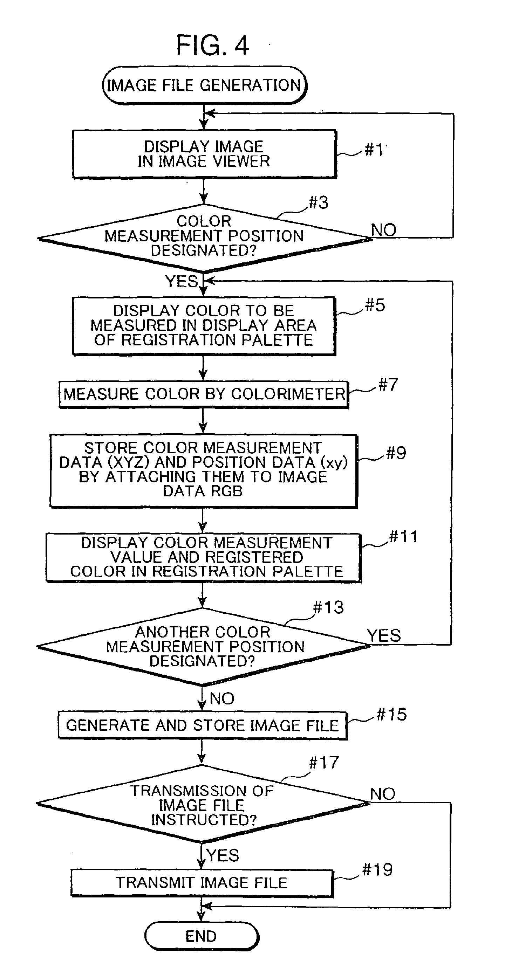

Next, the image file generation process performed in the image information generating unit 10 is described. FIG. 4 is a flowchart showing a procedure of the image file generation process. When generation of an image file F_{A} including a color value data is instructed for an image file F stored in the image data storage 101 by operating the keyboard 13 or the mouse 14, an image data (RGB data) included in the image file A is first read and displayed in the display area AR1 of the image viewer 12a (Step #1), and this routine waits on standby until a color measurement position is designated (loop of Steps #1 and #3). Taking FIG. 2 as an example, the RGB data of the image G representing a tricolor flag of blue, white and read from left is read and displayed in the display area AR1 of the image viewer 12a.

When the cursor K is set at the position of a color in the image G displayed in the display area AR1 of the image viewer 12a at which position an operator desires to apply color measurement by operating the mouse 14 and a measurement of this color is designated by double-clicking the mouse 14 (YES in Step #3), the designated color is displayed in the display area AR2 of the registration palette 12b (Step #5). In the example of FIG. 2, when point P in a blue section of the tricolor flag image G is designated, the same color as the blue color at point P is displayed in the display area AR2 of the registration palette 12b.

The colorimeter 15 is set in an area of the display screen of the display 12 where the registration palette 12b is displayed and, when the color (blue) at point P is displayed in the display area AR2, this displayed color is measured by the colorimeter 15 (Step #7). This color measurement data (X_{P}, Y_{P}, Z_{P}) is stored in the image data storage 101 in correspondence with the image data (R_{P}, G_{P}, B_{P}) at point P and the position data (X_{P}, Y_{P}) of point P (Step #9). In other words, the image data of the color at point P is registered to include the color value data and the position data.

Subsequently, such a palette display as to represent registration of the measured color is made in the display area AR4 (Step #11). If color measurement of another color in the image G is instructed (YES in Step #13), this routine returns to Step #5 and the color value data and the position data are calculated for the designated color in the same procedure as the one described above, and stored together with the image data in the image data storage 101 (Steps #5 to #11).

Upon completion of the color measurement instruction (NO in Step #13), the image file F is generated by combining the image data (RGB data), the color value data (XYZ data), the position data (xy data) and pieces of information on the file and stored in the image data storage 101 (Step #15).

It is then discriminated whether there is any instruction to transmit the image file F (Step #17). The image file generation process is ended unless there is such a transmission instruction of the image file F (NO in Step #17), whereas the image file generation process is ended after the image file is transmitted to a designated receiving end (Step #19) if there is such a transmission instruction of the image file F (YES in Step #17).

Although the operator successively designates desired colors in the image G to obtain the color value data in this embodiment, color value data may be automatically obtained at once for all the designated colors after a plurality of color measurement points are designated, and respectively registered, and the image file F may be finally generated. With such an arrangement, it is sufficient for the operator to designate the color measurement points at first, resulting in an easier operation and an improved operation efficiency.

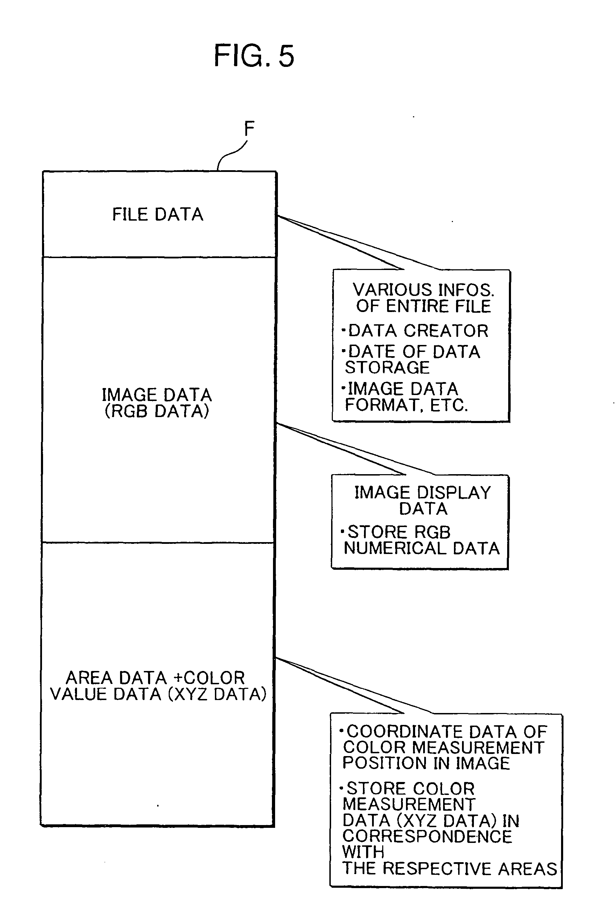

In this embodiment, the operator designates a luminous position of the color he desires to register while viewing the image displayed in the image viewer 12a to designate the color on the assumption that color differs in each point of xy coordinates, and the position data, the color value data and the image data of this luminous position are registered in correspondence. However, depending on the image G, an entire pattern is formed by a collection of a plurality of closed areas like the tricolor flag image shown in FIG. 2 and character images. In such images, the respective closed areas are usually colored in the same colors. Accordingly, for such images, when an arbitrary position in each closed area is designated, color at this position is measured and registration of the measured color may be made for all position data in the closed area by corresponding the color value data and the image data. Even in the case that an image is colored in a plurality of colors and an area closed in the same color is unclear, the operator may designate an area he recognizes to be colored substantially in the same color, a color measurement value data of the color at an arbitrarily designated position in such an area may be registered in correspondence with all the image data in this area, and an image file may be constructed by combining the image data with an area data and the color value data as shown in FIG. 5.

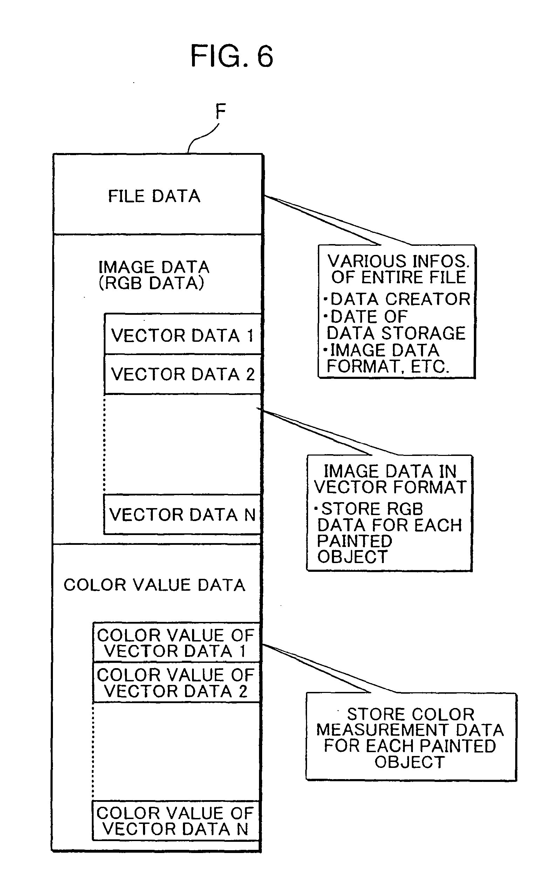

Even in the case that an image data is generated in vector format, each painted object is thought to be colored in the same color. Thus, if an arbitrary position in each painted object is designated, the color at this position is measured and the measured color may be registered while corresponding a color value data to a vector data, and an image file may be constructed by combining the image data with the color value data in which the color value is corresponded to each vector data as shown in FIG. 6.

Alternatively, the color value data may be obtained for all pixel positions of the image G and an image file may be generated by corresponding these color value data to the image data. In such a case, although the color value data may be obtained for all pixel positions, it is difficult to quickly perform the image file generation process if the number of pixels and the number of colors are huge as in the case of, e.g., a picture image and, accordingly, the color value data to be obtained are also huge. Thus, this method is particularly effective in the case that the image data is generated in vector format or the image has a simple color arrangement structure such as when being colored in several colors like a tricolor flag.

If the image data is generated in vector format, the color value data can be automatically obtained for all painted objects by displaying the image data of each painted object in the display area AR2 of the registration palette 12b and applying a color measurement, making it unnecessary for the operator to designate an arbitrary position in the image G as a color measurement position. Thus, operability can be further improved. In the case that the image G is colored in several colors, it may be divided into areas assumed to have substantially the same colors using the image data and color at an arbitrary position within the respective areas may be successively displayed and measured as a representative color of the area in the display area AR2 of the registration palette 12b. In this case as well, the color value data can be automatically obtained for the respective areas, thereby improving an operation efficiency.

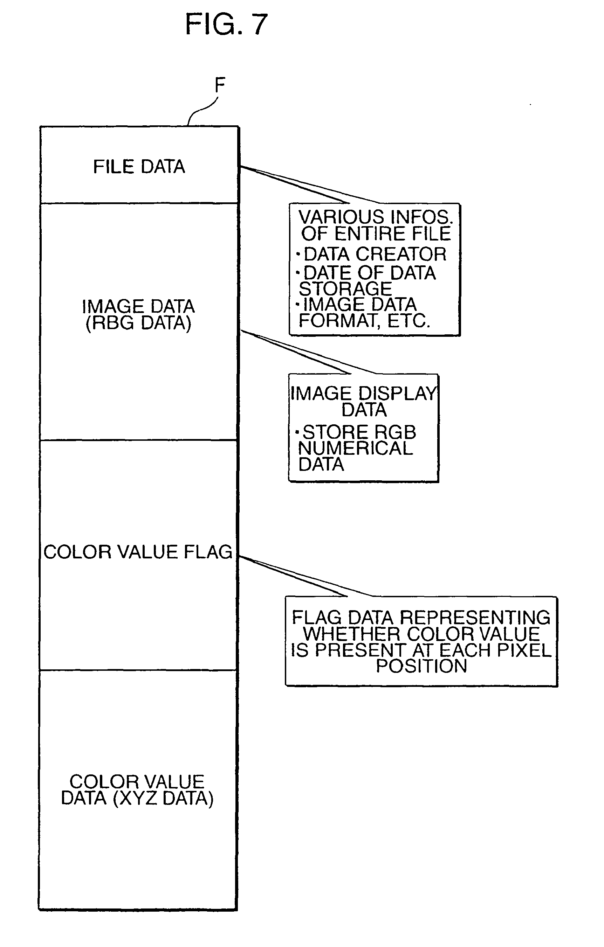

FIG. 7 is a diagram showing a configuration of the image file based on an idea that the color value data are obtained for all pixel positions of the image G.

In the image file configuration of FIG. 7, a flag data representing whether or not there is any color value is attached to the image data of each pixel position, and the color value data are attached only for the pixel positions where the flag data exists.

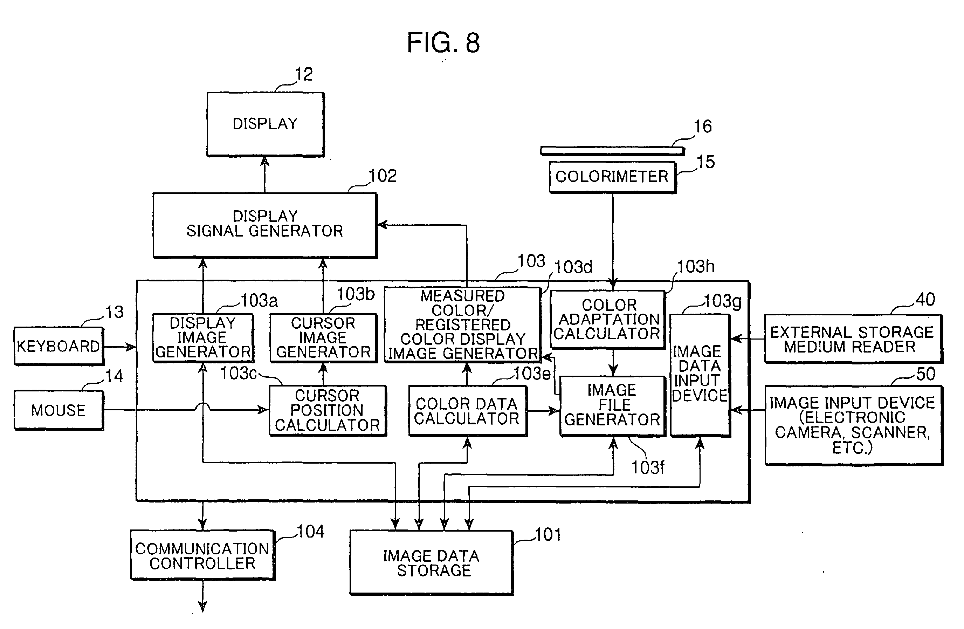

FIG. 8 is a block construction diagram showing a second image information generating unit 10 fulfilling the image file generating function.

The image file generating method of the first image information generating unit 10 is applied in the case that the image G is displayed and colored on the display 12.

An image file generating method of the second image information generating unit 10 differs from the first image information generating unit 10 in that the color value data is obtained by measuring a sample or the like by means of the colorimeter 15 instead of measuring the color displayed on the display 12 by means of the colorimeter 15. Accordingly, the block construction diagram of FIG. 8 differs in that the colorimeter 15 opposed to the display 12 in the block construction diagram of FIG. 3 is opposed to a color sample 16, and a color adaptation calculator 103h is provided before the image file generator 103f in the controller 103.

Although the color displayed on the display 12 is measured by the colorimeter 15 to measure a light source color in the first image information generating unit 10, color of an object such as a sample is measured by the colorimeter 15 in the second image information generating unit 10. Thus, the color value data obtained by the second image information generating unit 10 generally differ from those obtained by the first image information generating unit 10.

Since both the first and second image information generating units 10 assume reproduction of an image on the display 22 in the image information output unit 20, a degree of color adaptation (type of color: light source color or object color) which degrees depending on an observation condition needs to be adjusted in order to evaluate a degree of color coincidence between two images based on the color value data of the image generated in the image information generating unit 10 and that of the image reproduced in the image information output unit 20. Since the light source color is measured in the first image information generating unit 10, the color value data can be utilized as it is for the evaluation of color coincidence in the image information output unit 20. However, since the object color is measured in the second image information generating unit 10, it is not preferable to utilize the color value data as it is in evaluating the color coincidence in the image information output unit 20. Thus, the color adaptation calculator 103h is provided before the image file generator 103f in the second embodiment to convert the color value data obtained by the colorimeter 15 into a color value data (color value data of the light source color) which enables a proper color reproduction when the image is outputted on the display.

Conditions of the light source color necessary for this conversion of the color value data are inputted via the keyboard 13. The color adaptation calculator 103h converts the color value data of the object color into that of the light source color using the conditions of the light source color and a color appearance model set in advance (e.g., models such as CIECAM97s (CIE chromatic adaptation model 97s), RLAB, Nayatani and LLAB).

If the image file generated in the first image information generating unit 10 is outputted by a printer or the like in the image information output unit 20 and color coincidence is evaluated using such an output image, it is necessary to provide a color adaptation calculator for converting the color value data of the light source color into that of the object color using a color appearance model before the image file generator 103f of the controller 103 in FIG. 3.

In the case that the image data is outputted by a printer or the like in the image information output unit 20, the color adaptation calculator 103h needs not be provided in FIG. 8 since color coincidence is evaluated using the color value data obtained by measuring the object color (i.e., color coincidence is evaluated on the same observation condition) in the image information output unit 20.

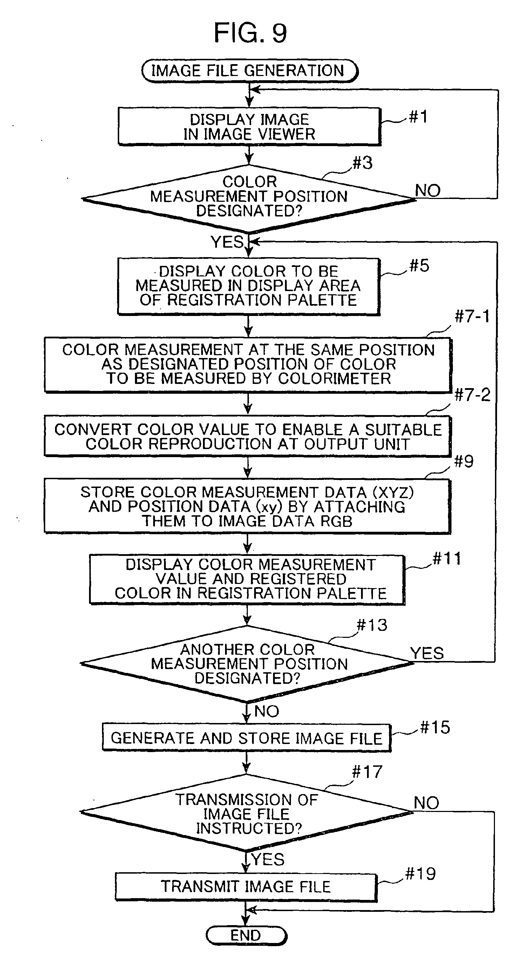

FIG. 9 is a flowchart showing a procedure of an image file generation process performed in the second image information generating unit 10.

The image file generation process performed in the second image information generating unit 10 is substantially identical to that performed in the first image information generating unit 10, and the flowchart of FIG. 9 differs from that of FIG. 4 only in that the operation in Step #7 is changed into operations in Steps #7-1 and #7-2.

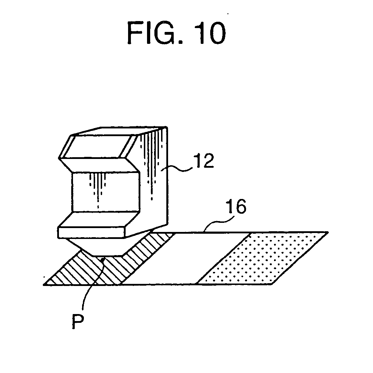

In the second image information generating unit 10, a sample or the like to be measured is prepared and color measurement is carried out by opposing the colorimeter 15 to a portion of this sample corresponding to a designated measurement position in Step #7-1. In the example of FIG. 2, a tricolor flag sample or a tricolor flag image colored in actual colors is prepared as a sample as shown in FIG. 10 and if, for example, color measurement is applied to point P in a blue area, it is carried out by opposing the colorimeter 15 to the tricolor flag sample or the position of the image substantially corresponding to point P.

In Step #7-2, the color value data of the object color obtained by the colorimeter 15 is converted into that of the light source color using a specified color appearance model.

In the second image information generating unit 10, the converted color value data is stored in the image data storage 101 in correspondence with the image data and the position data in Step #9, and an image file is generated by combining the image data (RGB data), the color value data (XYZ data) after conversion into the light source color, the position data (xy data) and pieces of information on the file and stored in the image data storage 101 in Step #15. In Step #11, the color value data converted to be of the light source color is numerically displayed in the display area AR3 of the registration palette 12b. Color corresponding to the color value data can be displayed in palette format in the display areas AR2, AR4 (by a color reproduction method to be described later).

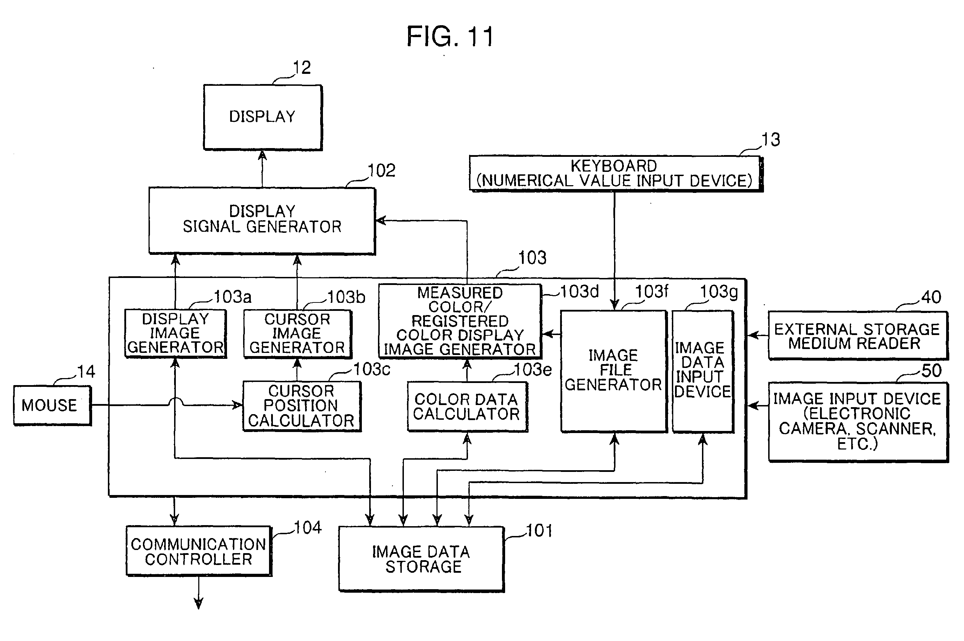

FIG. 11 is a block construction diagram showing a third image information generating unit 10 fulfilling the image file generating function.

In the third image information generating unit 10, the color value data is directly inputted by means of a numerical value input device 13 such as a keyboard instead of inputting the color value data by measuring an actual color by means of the colorimeter 15 in the case that the color value data (color value data of the light source color) represents a known color. Accordingly, the block construction diagram of FIG. 11 differs from that of FIG. 8 in that the colorimeter 15 opposed to the display 12 is replaced by the keyboard (numerical value input device) 13 capable of numerically inputting the color value data. Since the known color value data is of the light source color in this embodiment, no color adaptation calculator 103h is provided before the image file generator 103f. If the color value data inputted from the numerical value input device 13 is of the object color, the color adaptation calculator 103h may be provided before the image file generator 103f similar to the construction of FIG. 8.

The image file generation process performed in the third image information generating unit 10 is substantially identical to the one performed in the second image information generating unit 10, and only Steps #7-1 and #7-2 differ in the flowchart of FIG. 9. In other words, Step #7-2 is unnecessary and the color value data prepared in advance is directly inputted by means of the keyboard 13 in Step #7-1 in the third image information generating unit 10.

Further, the color value data inputted by means of the keyboard 13 is stored in the image data storage 101 in correspondence with the image data and the position data in Step #9, and an image file is generated by combining the image data (RGB data), the numerically inputted color value data (XYZ data), the position data (xy data) and pieces of information on the file and stored in the image data storage 101 in Step #15. In Step #11, the numerically inputted color value data is numerically displayed in the display area AR3 of the registration palette 12b, and color corresponding to the color value data can be displayed in palette format in the display areas AR2, AR4 (by the color reproduction method to be described later).

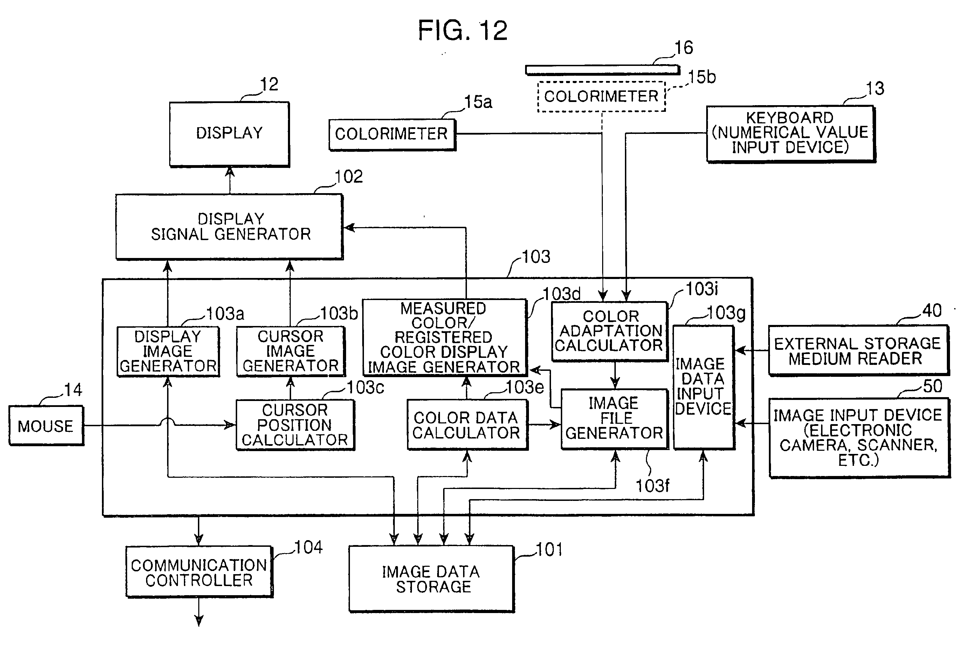

Although three kinds of methods for obtaining the color value data are separately described above, all data obtaining methods may be made selectable in the case of realizing the image information generating unit 10. FIG. 12 is a block construction diagram of a fourth image information generating unit 10 in which three kinds of color value data obtaining methods are selectable.

In the block construction diagram of FIG. 12, color displayed on the display 12 and color of a sample 16 can be measured by colorimeters 15a, 15b, respectively, and a numerical value of a color value data can be inputted by means of the keyboard 13. Here, the colorimeters 15a, 15b can be the same colorimeter. Since both the color value data of the light source color and that of the object color can be inputted from the colorimeters 15a, 15b or the keyboard 13, a color adaptation calculator 103i is provided before the image file generator 103f. This color adaptation calculator 103i is capable of converting the color value data of the light source color to that of the object color and vice versa, and an operator can select a conversion content of the color value data according to the kind of the color value data inputted from the colorimeter 15a, 15b or keyboard 13.

Accordingly, both the color value data of the light source color and that of the object color are generated and image files are generated by combining them with the image data and the position data in this embodiment. Thus, color coincidence can be properly evaluated regardless of whether the image data is outputted on the display (light source color output) or from the printer (object color output) in the image information output device 20.

When the color value data is obtained by measuring an object color such as a real sample or a color sample by means of the colorimeter 15, how color looks may be influenced by the surface state of an object. In such a case, it is difficult to precisely evaluate color coincidence only based on the color value data attached to the image data. Thus, it is preferable to attach, for example, a data on the surface state of the object (glossiness) to the image data together with the color value data.

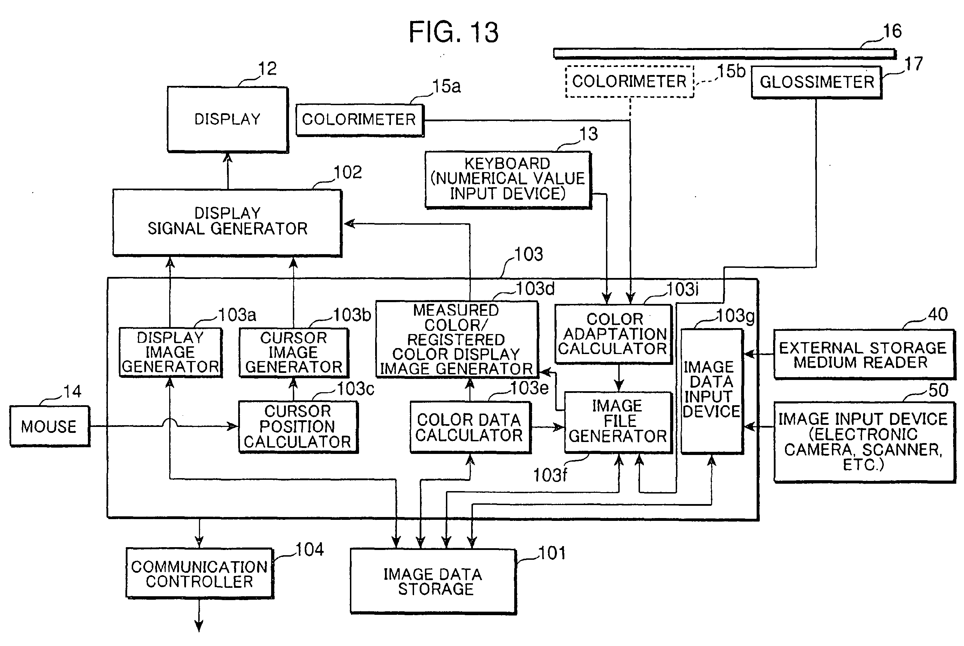

FIG. 13 is a block construction diagram showing a fifth image information generating unit 10 fulfilling the image file generating function. Specifically, a glossimeter 17 is added in the construction of FIG. 12. In the fifth image information generating unit 10, the color value data can be inputted by means of the colorimeters 15a, 15b and a glossiness data can be inputted by measuring the glossiness of an object to be measured by means of the glossimeter 17. Glossiness measurement by the glossimeter 17 is carried out by a method similar to the method for measuring the color value by means of the colorimeter 15 shown in FIG. 9. The glossiness data outputted from the glossimeter 17 is inputted to the image file generator 103f and used to generate an image file.

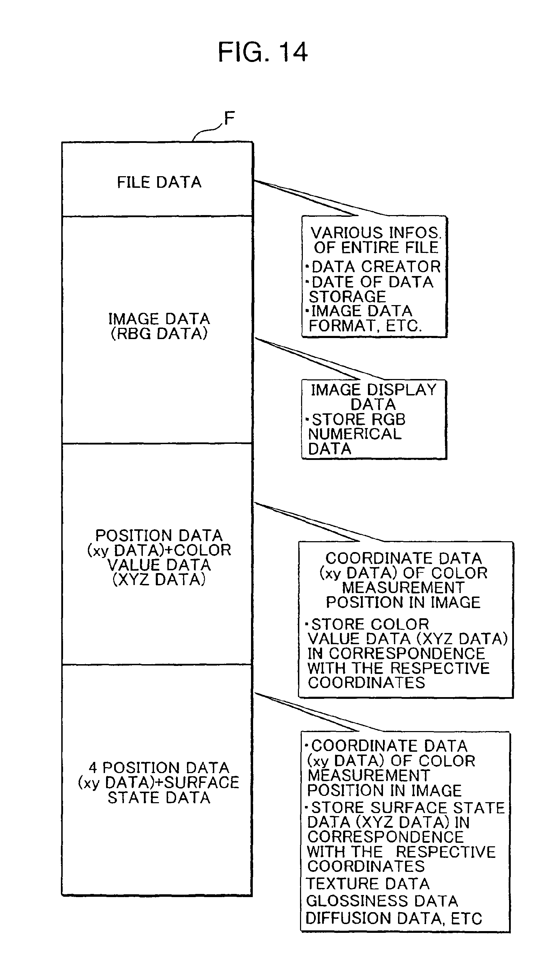

The image file generator 103f combines the color measurement position data and the image data inputted from the color value data calculator 103e, the color value data inputted from the colorimeter 15 via a color adaptation calculator 103i, the glossiness data inputted from the glossimeter 17 and the file data to generate an image file F having a data configuration, for example, shown in FIG. 14. The file data shown in FIG. 14 is comprised of pieces of information on the entire image file, and the image data is a RGB data for displaying the image G on the output device. The color value data is a data obtained by the colorimeter 15 and stored in correspondence with the color measurement position data. The surface state data is a data obtained by the glossimeter 17 and stored in correspondence with the color measurement position data.

Although the glossimeter data is a data on the mirror surface of the object to be measured in this embodiment, a surface shape data (knit texture, irregular surface of plastic material, three-dimensional data) and a diffusion data (data representing a light diffusing state on the outer surface of the object) of the object may be obtained as a surface state data influential to color appearance and attached to the image data.

If the surface state data is attached to the image data, color coincidence can be evaluated also in consideration of the surface state in the image information output unit 20. Thus, even in the case that an image creator colored an object having a special surface state, a third person having received an image file can precisely reproduce and confirm the color intended by the image creator.

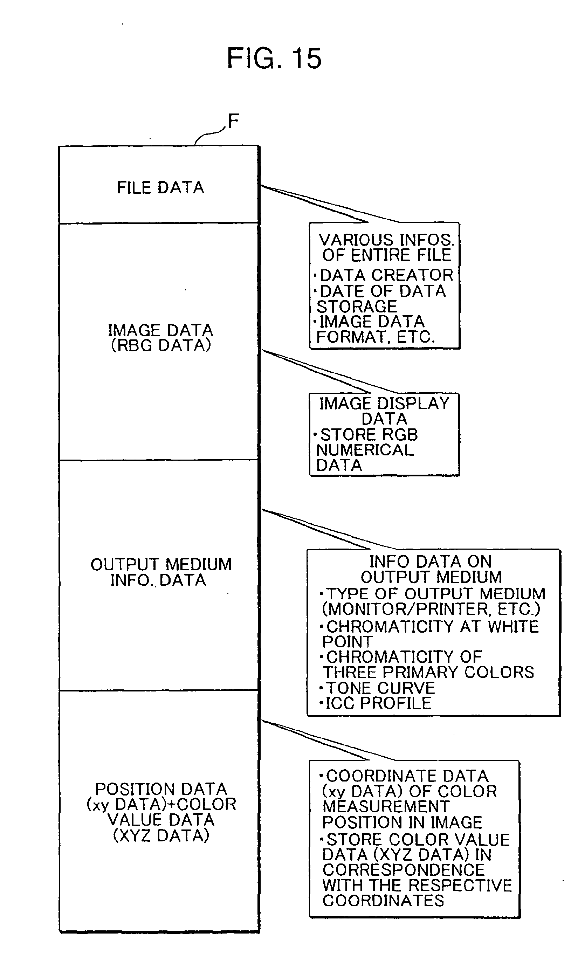

Although the color value data and the surface state data are attached to the image data so that the output color can substantially coincide with the color intended by the image creator when the image data is outputted in this embodiment, pieces of information on an output medium such as a display or a printer having outputted the image at the side of the image creator to obtain the color value data (specifically, characteristic data including type of the output medium, chromaticity of white point, chromaticities of RGB/CMYH primary colors, tone curve, ICC (international color consortium) profile, etc. and referred to as "output medium information data" hereinafter) may be attached to the image data as shown in FIG. 15.

Next, the image information output unit 20 is described. In the following description, a case where the image file F having a data configuration shown in FIG. 1 is transmitted from the image information generating unit 10 is described as an example.

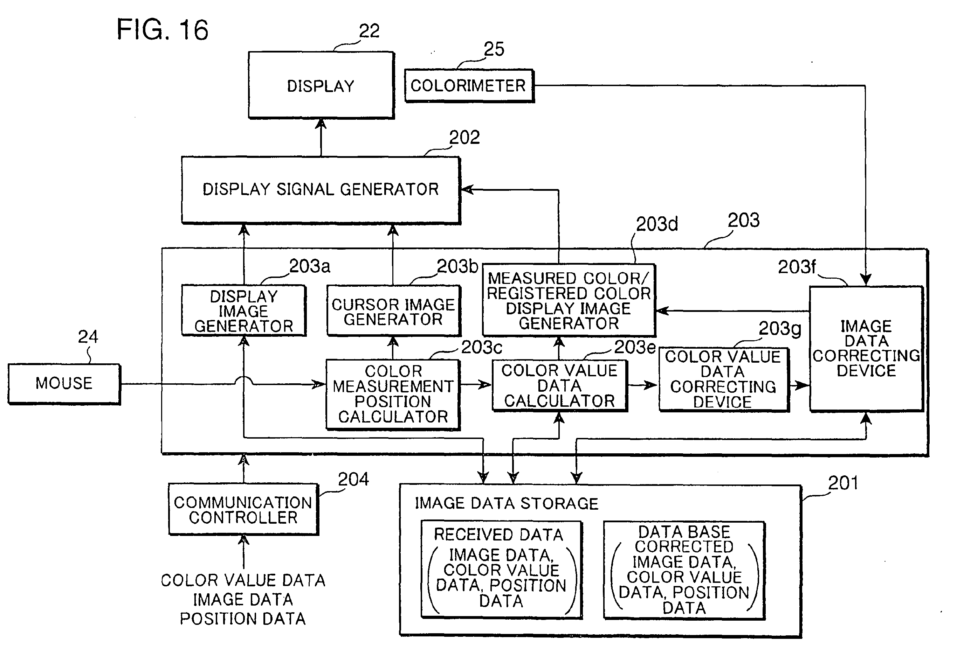

FIG. 16 is a block construction diagram showing a first image information output unit 20 fulfilling an image outputting function. In FIG. 16, elements having the same functions as those shown in FIG. 2 are identified by the same reference numerals.

An image data storage 201 is adapted to store an image file (image file F received from the image information generating unit 10 by communication) necessary for an image output process, an image file F' in which the image data is corrected by the image output process such that the output color coincides with the created color, a data base representing a relationship between the color value data and the corrected image data (LUT (look-up table), etc.). Although the image file F necessary for the image output process is obtained by communication in this embodiment, it may be obtained via an external storage medium such as a CD-ROM. In such a case, the image file F read from the CD-ROM or the like by an external storage medium reader is stored in the image data storage 201 although not shown.

A display signal generator 202 generates a drive signal used to cause an image data included in the image file F to be displayed on the display 22. This drive signal is inputted to the display 22, which in turn displays the specified image for generation of the image file as shown in a display example of the image information output unit 20 of FIG. 2 in accordance with this drive signal.

In the display example of FIG. 2, a dialogue display of an image viewer 22a for displaying the image G (image of the tricolor flag is shown as an example in FIG. 2), a display of a cursor K, a display of a color designated by the cursor K to be registered in order to enable a color measurement by the colorimeter 25, and a dialogue display of a registration palette 22b for displaying the registered color in palette format are made on a display surface of the display 22. These displays are described in detail later.

A controller 203 is comprised of a CPU (central processing unit) and adapted to control the output of the image file to the display 22. The controller 203 is provided, as function blocks for performing the image file output process, with a display image generator 203a, a cursor image generator 203b, a color measurement position calculator 203c, a measured color/registered color display image generator 203d, a color value data calculator 203e, an image data correcting device 203f and a color value data correcting device 203g.

The display image generator 203a generates an image of the image viewer 22a to be displayed on the display 22. The image viewer 22a has an image display area AR5 and the image G of the received image file F is displayed in this display area AR5 as shown in FIG. 2. A display size of the image G in the display area AR5 can be set at a desired size. When the image G is displayed in an enlarged manner, part of the image G is displayed in the display area AR5, and the other part thereof which is not displayed can be scroll-displayed using an unillustrated scroll key.

The display image generator 203a reads the image data of the image file F designated for the image output from the image data storage 201 in accordance with a specified image viewer display software, generates the image of the image viewer 22a and outputs its image information to the display signal generator 202. It should be noted that a command for designating the image file F for the image display is inputted by an operator maneuvering the keyboard 23 or the mouse 24.

The cursor image generator 203b generates an image of the cursor K displayed on the display 22 and also generates an image of the cursor K movably displayed on the display screen of the display 22 based on a movement information of the cursor K on the display screen inputted from the color measurement position calculator 203c. The information on the display image of the cursor K generated by the cursor image generator 203b is inputted to the display signal generator 202.

The color measurement position calculator 203c calculates a display position or moving position of the cursor K on the display screen of the display 22 and the color measurement position (xy data) of the registered color designated by the cursor K from a plurality of registered colors displayed in a display area AR8 of the registration palette 22b to be color-adjusted. The color measurement position calculator 203c calculates the movement information of the cursor K on the display screen of the display 22 based on an operated direction and an operated amount inputted from the mouse 24, and outputs a calculation result to the cursor image generator 203b.

Since the position data and the color value data are stored in pairs in the image file F as shown in FIG. 1, the color measurement position calculator 203c calculates the position data corresponding to the color value data of the designated registered color as a data of the color measurement position. This calculation result is inputted to the display image generator 203a and used to display the color measurement position. In other words, in accordance with the data of the color measurement position inputted from the color measurement position calculator 203c, an image for blinkingly displaying the image data of this position is generated. For example, if a blue registered color Q is designated in the example of FIG. 2, point P in the blue area of the tricolor flag image G displayed on the image viewer 22a is blinkingly displayed.

In this way, a person (hereinafter, image outputting person) who outputs the image of the image file F can know at which position of the image G the color measurement was conducted for the registered color or confirm the color of the image at this position by color adjustment.

Since the position data and the color value data correspond in this embodiment, one point in the tricolor flag image is blinked. However, in the case that the area data including the same color as the one at the color measurement position corresponds to the color value data as shown in FIG. 5, the entire blue area of the tricolor flag image G or its area frame may be blinkingly displayed. Further, in the case that the area is designated, the entire area or its area frame may be blinkingly displayed. Further, if the position in the image G designated by the cursor K is located in an area registered in advance, the corresponding registered color of the registration palette 22b may be blinkingly displayed.

The measured color/registered color display image generator 203d generates an image of the registration palette 22b to be displayed on the display 22. The registration palette 22b is provided in the middle with a display area AR7 for displaying a color to be measured in a specified size (size measurable by a colorimeter) as shown in FIG. 2, and is also provided with a display area AR6 above the display area AR7 for numerically displaying the color value data (X,Y,Z) of the display color and a display area AR8 below the display area AR7 for displaying the registered color in palette format, the display areas AR6, AR8 being located above and below the display area AR7, respectively. Although ten colors can be displayed in palette format in FIG. 2, the number of the colors is not limited thereto. The number of the registered colors may be restricted according to the size of the display area AR8, and all the registered colors may be simultaneously displayed in palette format in the display area AR8. Alternatively, part of the registered colors may be scroll-displayed in the display area AR8 without restricting the number of the registered colors.

The measured color/registered color display image generator 203d generates the image of the registration palette 22b based on the image data (image data for displaying the registered colors for color adjustment) inputted from the color value data calculator 203e and correction values of the image data (RGB data) of the registered colors inputted from the image data correcting device 203f in accordance with the specified registration palette display software, and outputs this image information to the display signal generator 202.

Based on the image data of the image viewer 22a, the registration palette 22b and the cursor K which are inputted from the display image generator 203a, the cursor image generator 203b and the measured color/registered color display image generator 203d, the display signal generator 202 generates drive signals used to cause these images to be displayed on the display 22, and outputs to the generated drive signals to the display 22.

The color value data calculator 203e calculates color value data (X_{C}, Y_{C}, Z_{C}) of a registered color C based on a designation information of this registered color C inputted from the color measurement position calculator 203c. The color value data calculator 203e reads the color value data (X_{C}, Y_{C}, Z_{C}) of the designated registered color from the image data storage 201 and outputs it to the measured color/registered color display image generator 203d. The color value data calculator 203e outputs the color value data (X_{C}, Y_{C}, Z_{C}) to the image data correcting device 203f.

The image data correcting device 203f measures the registered color displayed in the registration palette 22b by means of the colorimeter 25, and calculates a corrected image data (R_{C}', G_{C}', B_{C}') of the registered color whose color value data substantially coincides with the color value data of a registered color to which the color measurement values are attached by, for example, the Newton-Raphson method using the color measurement values (color value data) and the color value data of the registered color attached to the image file F.

The image data (R_{C}' , G_{C}', B_{C}') after correction is outputted to the measured color/registered color display image generator 203d, whereby the color of the image data (R_{C}', G_{C}', B_{C}') after correction is displayed in the display area AR7 of the registration palette 22b. The image data correcting device 203f judges color coincidence again by the aforementioned method for the color of the image data (R_{C}', G_{C}', B_{C}') after correction.

Thereafter, the image data correcting device 203f causes the color of the image data (R_{C}', G_{C}', B_{C}') after correction to be displayed in the display area AR7 of the registration palette 22b while correcting the image data (R_{C}, G_{C}, B_{C}), causes the colorimeter 25 to measure the displayed color, completes the correction of the image data (R_{C}, G_{C}, B_{C}) when the measurement value substantially coincides with the color value intended by the image creator, and stores the corrected image data (R_{C}', G_{C}', B_{c}') at that time in the image data storage 201 in correspondence with the color value data (X_{C}, Y_{C}, Z_{C}).

In order to make a quick judgment on color coincidence, the image data correcting device 203f stores the color value data (X_{C}', Y_{C}', Z_{C}') in the image data storage 201 in correspondence with the image data (R_{C}' , G_{C}', B_{C}') to be displayed every time the color C displayed in the registration palette 22b is measured by the colorimeter 25 to obtain the color value data (X_{C}', Y_{C}', Z_{C}').

This data forms a look-up table (LUT) representing a relationship between the image data (R_{C}', G_{C}', B_{C}') to be displayed on the display 22 and the color value data (X_{C}' , Y_{C}', Z_{C}') of the displayed color. This LUT is used to look up whether a color value data (X_{C}", Y_{C}", Z_{C}") substantially coinciding with the color value data (X_{C}, Y_{C}, Z_{C}) attached to the image data (R_{C}, G_{C}, B_{C}) already exists before the color value data (X_{C}, Y_{C}, Z_{C}) and the color value data (X_{C}', Y_{C}' , Z_{C}') obtained by the color measurement are compared during color adjustment. If the color value data (X_{C}", Y_{C}", Z_{C}") substantially coinciding with the color value data (X_{C}, Y_{C}, Z_{C}) already exists in the LUT, color measurement by the colorimeter 25 becomes unnecessary by using the image data (R_{C}", G_{C}", B_{C}") corresponding to this color value data (X_{C}", Y_{C}", Z_{C}") as a correction value of the image data (R, G, B), thereby speeding up the color adjustment.

In the case that an output medium information data of the display 12 is attached to the image file F, the color value data correcting device 203g converts the image data (R_{C}, G_{C}, B_{C}) of the registered color C for which color adjustment was designated into the image data (R_{C}', G_{C}', B_{C}') used to approximately display the registered color C in the display area AR7 of the display 22 using the attached output medium information data and an output medium information data of the display 22.

A communication controller 204 controls a communication with the image information generating unit 10. The communication controller 204 receives the image file F by communicating with the image information generating unit 10 connected via the cable 30. The received image file F is stored in the image data storage 201.

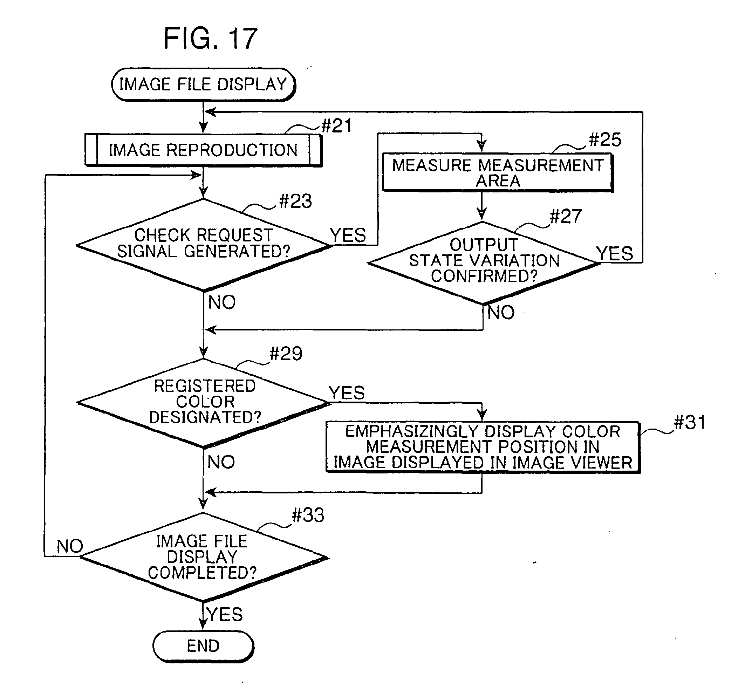

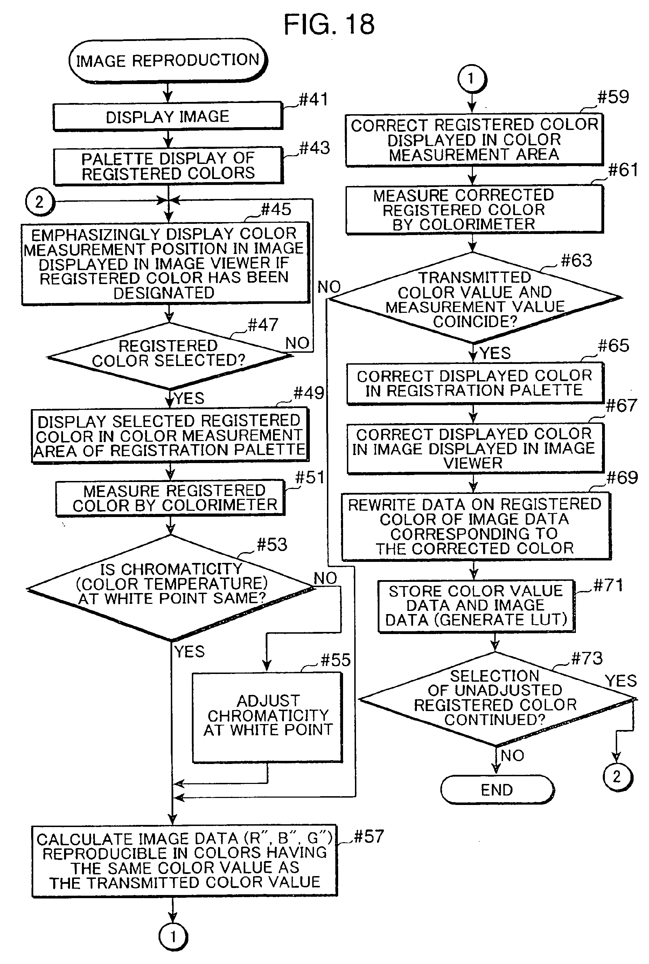

Next, an image output operation of the image information output unit 20 is described. FIG. 17 is a flowchart showing a display variation correcting procedure of the display 22, and FIG. 18 is a flowchart showing a specific operation procedure of a subroutine "Image Reproduction".

When an instruction is given to display an image G_{A} included in an image file F_{A} stored in the image data storage 201 by operating the keyboard 23 or the mouse 24, the subroutine "Image Reproduction" is executed in accordance with the flowchart shown in FIG. 18 (Step #21).

First, the image G_{A} is displayed in the display area AR5 of the image viewer 22a based on the image data (R_{A}, G_{A}, B_{A}) (Step #41), and the registered colors are displayed in the display area AR8 of the registration palette 22b (Step #43). If the output medium information data is attached to the image file F_{A}, the image data (R_{A}, G_{A}, B_{A}) in the image file F_{A} may be converted into the image data (R_{A}', G_{A}', B_{A}') to be displayed in approximate colors on the display 22 using this output medium information data and the output medium information data of the display 22 (already possessed or calculated by measurement) before the image is displayed in Step #41.

Subsequently, the color measurement position is emphasizingly displayed in the image G_{A} displayed in the image viewer 22b if the registered color C is designated by means of the cursor K (Step #45). If the registered color C to be color-adjusted is designated by means of the cursor K (YES in Step #47), it is displayed in the display area AR7 of the registration palette 22b (Step #49) and measured by the colorimeter 25 (Step #51). If the designated registered color C is looked up in the LUT stored in the image data storage 201 before color measurement is conducted in Step #51 and a data corresponding to the color value data (X_{C}, Y_{C}, Z_{C}) of the registered color C already exists, the image data (R_{C}", G_{C}", B_{C}") corresponding to the color value data (X_{C}, Y_{C} , Z_{C}) is picked up from the LUT as a corrected image data without the color measurement and the color adjustment by the Newton-Raphson method to be described later, and this subroutine proceeds to Step #65.

It is then discriminated whether a chromaticity data (or color temperature) of white point among the output medium information data of the display 12 attached to the image file F_{A} is identical to a chromaticity data (or color temperature) of white point of the display 22 (Step #53). If these chromaticity data of the displays 12 and 22 are not identical (NO in Step #53), the observation conditions of the displays 22 and 12 are made identical by adjusting the chromaticity data (or color temperature) of the display 22 to that of the display 12 (Step #55). On the other hand, if these chromaticity data (or color temperature)of the displays 12 and 22 are identical (YES in Step #53), this subroutine proceeds to Step #57 without changing the chromaticity data of the display 22.

Here, instead of adjusting the observation condition by changing the chromaticity data (or color temperature) of white point in Step #55, the color value data (X_{C}, Y_{C}, Z_{C}) may be converted into such a color value data (X_{C}', Y_{C}', Z_{C}') of the display 22 which should look to be the same as the color value data (X_{C}, Y_{C}, Z_{C}) of the display 12 under the observation condition of the display 22.

Color adjustment is conducted by the aforementioned Newton-Raphfson method in Steps #57 to #63. Specifically, the image data (R_{C}, G_{C}, B_{C}) or (R_{C}', G_{C}', B_{C}') is corrected based on the color value data (X_{C}, Y_{C}, Z_{C}) or X_{C}', Y_{C}', Z_{C}') and a color value data (X_{C0}, Y_{C0}, Z_{C0}) obtained by color measurement (Step #57), and the displayed color of the registration palette 22b is changed based on the image data (R_{C}", G_{C}", B_{C}") after correction (Step #59). This displayed color is measured again by the colorimeter 25 (Step #61), and a color value data (X_{C1}, Y_{C1} , Z_{C1}) obtained by this color measurement and the color value data (X_{C}, Y_{C}, Z_{C}) or (X_{c}', Y_{c}', Z_{c}') are compared (Step #63).

If the color value data (X_{c1}, Y_{c1,} Z_{c1}) does not substantially coincide with the color value data (X_{c}, Y_{c}, Z_{c}) or (X_{c}', Y_{c}', Z_{c}') (NO in Step #63), this subroutine returns to Step #57 and the operations in Steps #53 to #63 are repeated until these color value data substantially coincide with each other. If the color value data (X_{c1}, Y_{c1}, Z_{c1}) substantially coincides with the color value data (X_{c1}, Y_{c}, Z_{c}) or (X_{c}', Y_{c}', Z_{c}') (YES in Step #63), the correction of the image data (R_{c}, G_{c}, B_{c}) or (R_{c}', G_{c}', B_{c}') is completed and the colors displayed in the registration palette 22b and the colors of the image G_{A} displayed on the image viewer 22a for which color adjustment was applied are changed to the displayed color represented by this image data (image data after completion of the correction) (Steps #65, #67). Further, the image data (R_{c}, G_{c}, B_{c}) of the image file F_{A} is corrected into the image data (R_{c}", G_{c}", B_{c}") after correction (Step #69). Subsequently, the image data (R_{c}", G_{c}", B_{c}") after correction is stored in the image data storage 201 in correspondence with the color value data (X_{c}, Y_{c}, Z_{c}) (Step #71). This processing corresponds to the aforementioned LUT generation processing.

It is then discriminated whether there is any other registered color for which color adjustment should be conducted (Step #73). If the registered color is selected (YES in Step #73), this subroutine returns to Step #45 and the same color adjustment as above is conducted for the selected registered color (Steps #45 to 71). If no other registered color is selected (NO in Step #73), the subroutine "Color Reproduction" is completed to proceed to Step #23 of the routine "Display Variation Correction".

In Step #23, it is discriminated whether a check request signal requesting a check of an output variation of the display 22 has been generated. If no check request signal has been generated (NO in Step #23), this routine proceeds to Step #29. If the check request signal has been generated (YES in Step #23), a test color displayed in the registration palette 22b of the display 22 is measured by the colorimeter 25 to check an output variation (Step #25) and it is discriminated whether the output characteristic of the display 22 has been changed (Step #27). It should be noted that the check request signal is generated at predetermined intervals.

If the output characteristic of the display 22 has been changed (YES in Step #27), this routine returns to Step #21 to conduct the color adjustment again. Unless the output characteristic of the display 22 has been changed (NO in Step #27), this routine proceeds to Step #29. In the case that the color adjustment is conducted again, it may be successively conducted by automatically selecting and designating the registered colors already selected in the aforementioned subroutine "Image Reproduction" at once.

It is discriminated whether any registered color is designated in Step #29. If the registered color is designated (YES in Step #29), the position of the designated color or area in the image G_{A} displayed in the image viewer 22a is emphasizingly displayed (Step #31). If no registered color is designated (NO in Step #29), this routine proceeds to Step #33 without performing an operation in Step #31.

In Step #33, it is discriminated whether an end of the display of the image file has been instructed. This routine returns to Step #23 if the end has not been instructed (NO in Step #33) while completing the display processing if the end has been instructed (YES in Step #33).

As described above, in the image information output unit 20 of this embodiment, when the image file F_{A} transmitted from the image information generating unit 10 is to be reproduced on the display 22, the specified registered color of the image G_{A} displayed on the display 22 is measured by means of the colorimeter 25 and the color value obtained by this measurement and that of this registered color attached to the image data are compared and the image data of the image G_{A} is automatically adjusted so that the two color values substantially coincide. Thus, a recipient of the image file F_{A} can directly confirm the color substantially identical to the one intended by the image creator who generated the image file F_{A}.

Although the Newton-Raphson method is used as a color-matching technique in the foregoing embodiment, other techniques used in computer color-matching such as regula falsi may be used.

Although the registered colors desired to be color-adjusted are successively selected by the operator by means of the cursor K in the foregoing embodiment, it may be made possible to select and designate a desired number of registered colors desired to be color-adjusted at once beforehand and color adjustment may be automatically successively applied to the respective registered colors after selection. Alternatively, color adjustment may be automatically successively applied to all the registered colors.

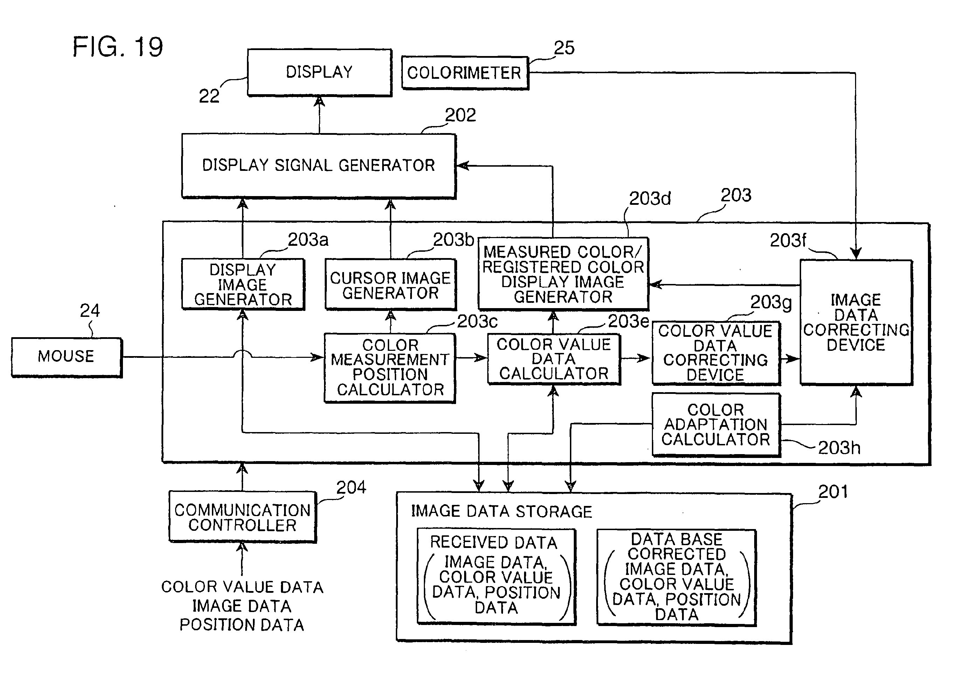

Since the image file F_{A} generated using the image of the light source color displayed on the display 12 is reproduced on the display 22 in the foregoing embodiment, a function of adjusting the color appearance is not provided in the block construction diagram shown in FIG. 16. However, a color adaptation calculator 203h may be provided between the image data correcting device 203f and the image data storage 201 as shown in FIG. 19 in order to deal with reproduction of an image file generated using an image of an object color, which enables such a data conversion that the image data generated using the image of the object color can be reproduced in suitable colors on the display 22.

Further, although the transmission of the image file F containing a still image is described in the foregoing embodiment, the present invention is not limited thereto. The present invention is also applicable to the transmission of an image group comprised of a plurality of still images largely related to each other or the transmission of animated images. In such cases, a color value data and a position data are attached to an image data for each image or an image of each frame.

For example, if the animated images are animation pictures, the color value data and the position data can be attached to an image data for each frame by using a software applied to an animation creating system by computer. Specifically, in the animation creating system, after drawings consisting of outlines or characteristic lines are created, they are colored. If the drawings are created, for example, on a tablet by using pens, they are then converted into electronic data using a specified drawing software. Coloring is performed using a specified painting software with which, upon designating a closed area of a figure in the drawing and a color desired to paint this closed area, a paint area in the drawing is automatically detected and the designated color is painted in the detected area.

In the animation production, images are produced while being separated into background images and character images. Since the same still image is used as the background image of the respective frames, if the respective closed areas are painted for the first drawing, color value data and data (position data) on the areas of the drawing corresponding to the color value data can be obtained for that background image. Thus, these color value data and position data can be attached to the image data of each frame. On the other hand, although the drawn character images in each frame are not same, they are similar in adjacent frames. Thus, if painting is performed for the first drawing, the color value data and the position data on the characters in the respective frames can be attached by using a painting software for automatically judging the closed areas assumed to the same closed areas in the adjacent frames and painting them in corresponding colors.

Accordingly, by generating the image file having a data construction comprised of the image data, the color value data and the position data for each image or for an image of each frame for the image group or animated images and transmitting such an image file, the recipient of the image file can reproduce the colors intended by the image creator. In other words, by picking up a correction image data from a LUT generated by performing color adjustment to the registered colors once and stored in the image data storage, the recipient can reproduce the image group or animated images in colors intended by the image creator without performing the color measurement or color adjustment for each image or for each frame image.

In the foregoing embodiment is described the image information transmitting method which enables the image generated in the image information generating unit 10 to be reproduced in colors intended by the image creator in the image information output unit 20. Next, a case in which this image information transmitting method is applied to an image information delivery service is described.

As mentioned above, it has become general in recent years to convert images into an electronic data and transmit then via communication, and it is essential that images having substantially the same color values can be confirmed at a transmitting side and at a receiving side. Cases of delivering an image information include cases of delivering the image information to specified people having a contract with a deliverer of the image information and cases of delivering the image information to unspecified people.

One example of the former cases may be such that created design images are transmitted between a designer and a company having a contract with him, and these two parties examine and evaluate the designed images.

Examples of the latter cases may be such that an image of a product is transmitted to a client having accessed to this product in a mail-order business using the Internet and that an image information is transmitted in an image archive business.

In any of these cases, colors are an essential factor in evaluating designs and products. Thus, it is quite meaningful that the substantially same color values can be confirmed at the transmitting side and at the receiving side in the image information transmission. However, it is not preferable that the image information is distributed to unspecified people by recipients against an image information sender's will after being transmitted.

Accordingly, in the case that the image information transmitting method is applied to an image information delivery service, it is desirable to restrict a profit enjoyed by a recipient of an image file to such a range that the image file can be reproduced substantially in the same colors as those intended by an image file creator and to mandate procurement of a permission of an image file sender for secondary utilization such as storage of the image file in a storage medium other than the recipient's receiving unit (image information output unit), output by means of, e.g., a printer, forwarding to a third person, and image processing, thereby preventing added values in an image providing service from being reduced.

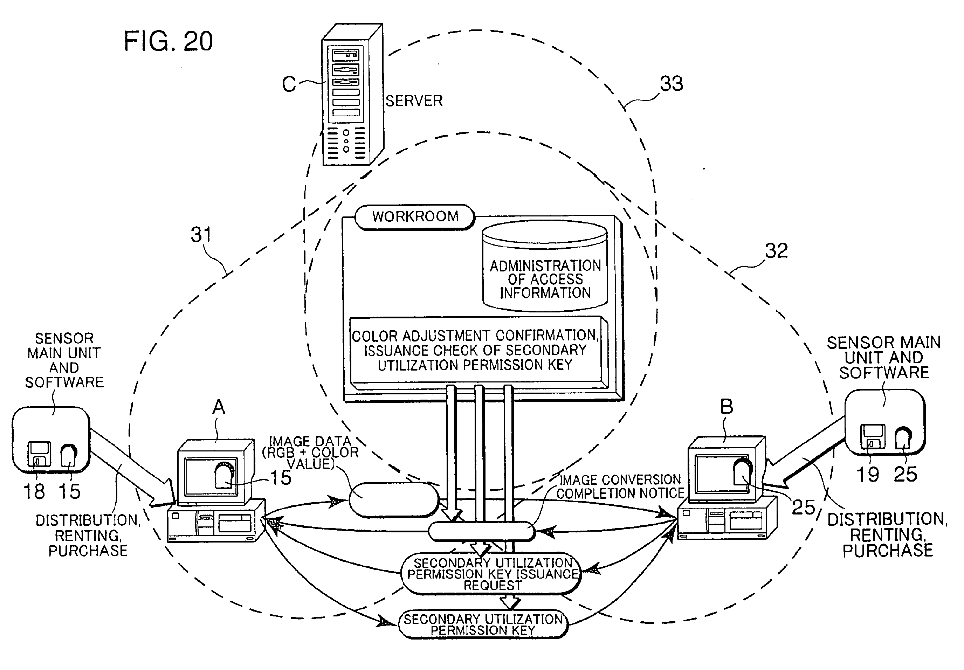

FIG. 20 is a diagram showing a construction example of an image information transmission system for transmitting an image information between an image information sender and a specified image information recipient, to which system the image information transmitting method is applied.

In FIG. 20, a computer A is a transmitting terminal for transmitting an image information and a computer B is a receiving terminal for receiving the image information.

The image information sender borrows or purchases a storage medium 18 storing a processing program for fulfilling the aforementioned image file generating function and a colorimeter 15 upon making a license contract with a service provider adopting the inventive image information transmitting method, installs the image file generation program stored in the storage medium 18 in the computer A, and mounts the colorimeter 15 at a specified position of a display of the computer A. As a result, the computer A can operate as the aforementioned image information generating unit 10.

On the other hand, the image information recipient borrows or purchases a storage medium 19 storing a processing program for fulfilling the aforementioned image file displaying function and a colorimeter 25 upon making a license contract with the service provider adopting the inventive image information transmitting method, installs the image file display program stored in the storage medium 19 in the computer B, and mounts the colorimeter 25 at a display position of a registration palette 22b of a display of the computer B. As a result, the computer B can operate as the aforementioned image information output unit 20.

In this image information transmission system, the image information sender administers confirmation of reproduction of an image file by the image information recipient and permission of secondary utilization by him. Specifically, the image information sender receives an end report from the image information recipient in the case that the image information recipient could reproduce the image file in colors intended by the image creator, thereby being enabled to confirm that the image information recipient could properly receive the service. Further, the image information sender transmits the image data to the image information recipient while prohibiting the secondary utilization thereof in order to restrict the secondary utilization by the image information recipient and, upon receiving a request of a secondary utilization key from the image information recipient, transmits the secondary utilization key to permit the secondary utilization of the image information by the image information recipient.

Thus, in this image information transmission system, these administering functions are provided in either the computer A or the computer B. In FIG. 20, "Access Information Administration", "Color adjustment Confirmation/Secondary Utilization Permission Key Issuance Check" correspond to the aforementioned contents of administration, and dotted line 31 indicates a case where the administering functions are provided in the computer A while dotted line 32 indicates a case where the administering functions are provided in the computer B.

A server C may be provided between the computer A and the computer B, so that the transmission of the image information between the computers A and B can be controlled by the server C. In such a case, the server C administers the "Access Information" and the "Color adjustment Confirmation/Secondary Utilization Permission Key Issuance Check" as indicated by dotted line 33.

The "Access Information" includes an information on the number of times the image file recipient confirmed that the image of the image file could be displayed in colors as intended by the image creator and an information on the number of issuance of the secondary utilization permission key. Further, the "Color adjustment Confirmation/Secondary Utilization Permission Key Issuance Check" includes confirmation of the image file recipient that the image of the image file could be displayed in colors as intended by the image creator, confirmation of issuance request of the secondary utilization permission key from the image file recipient, and confirmation of issuance of the permission key in response to the issuance request of the secondary utilization permission key.

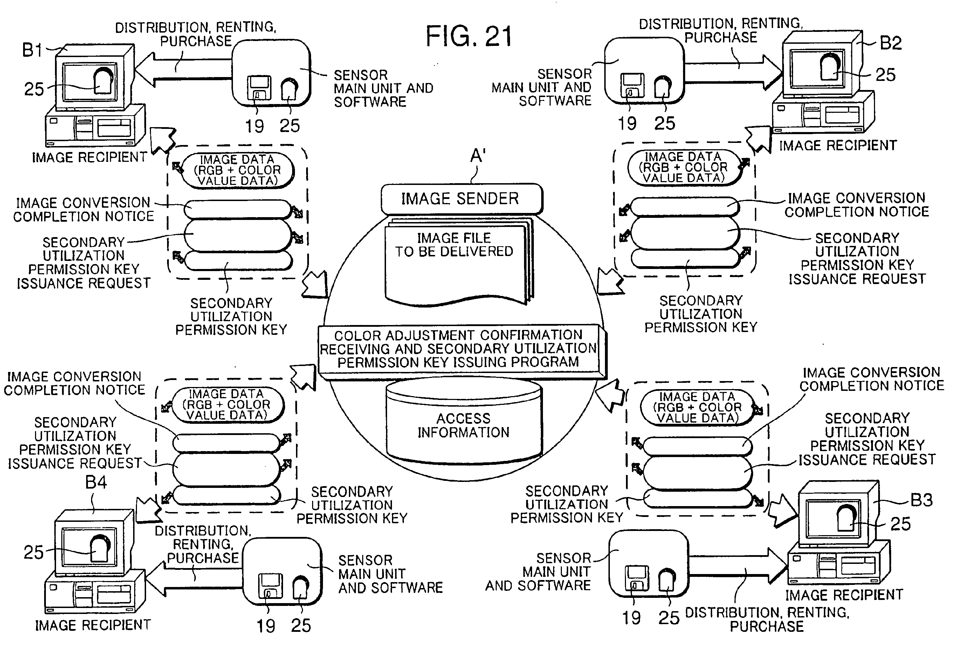

FIG. 21 is a diagram showing a construction example of the image information transmission system to which the image information transmitting method according to the present invention is applied and in which an image information is transmitted between an image information sender and unspecified image information recipients.

In FIG. 21, an image sender A' is a computer for transmitting an image information and corresponds to an image deliverer in the system for supplying a client (unspecified person) with the image information in response to a request. In this embodiment, the image sender A' does not possess a function of creating an image file and provides only a service of delivering the image file instead of an image creator. A specific example of the system of FIG. 21 may be an agent executing a mail-order business on the Internet, wherein a web site of the mail-order business corresponds to the image sender A', and personal computers connected with the Internet correspond to computers B1, B2, B3, B4. Although the number of clients is "4" in this example, it is not limited thereto.

The image sender A' receives the image file to be delivered from an image file creator having a contract and stores it in a storage medium such as a hard disk device. The image sender A' also administers a delivery service of image files to the clients (administers "Access Information" and "Color adjustment Confirmation/Secondary Utilization Permission Key Issuance Check").

The computers B1, B2, B3, B4 are computers for receiving the image information and correspond in the system to the clients (unspecified people) requesting the image information. Users of the computers B1, B2, B3, B4 borrow or purchase the storage medium 19 storing a processing program for fulfilling the aforementioned image file displaying function and the colorimeter 25 upon making a license contract with the service provider (image sender A') adopting the image information transmitting method, installs the image file display program stored in the storage medium 19, and mounts the colorimeter 25 at a display position of a display. As a result, the computers B1, B2, B3, B4 can operate as the aforementioned image information output units 20.

Next, a procedure of transmitting the image information in the image information transmission system shown in FIG. 20 or 21 is described. In the image information transmission system shown in FIG. 20 or 21, the computer A or the image sender A' is an unit for fulfilling substantially the same function as the image file transmitting function of the image information generating unit 10 and transmitting the image information, whereas the computer B or the computers B1, B2, B3, B4 are units for fulfilling substantially the same function as the image displaying function of the image information output unit 20 and receiving the image information. Accordingly, in the following description, the former is referred to as an "image information transmitter" while the latter is referred to as an "image information receiver" for the sake of convenience.

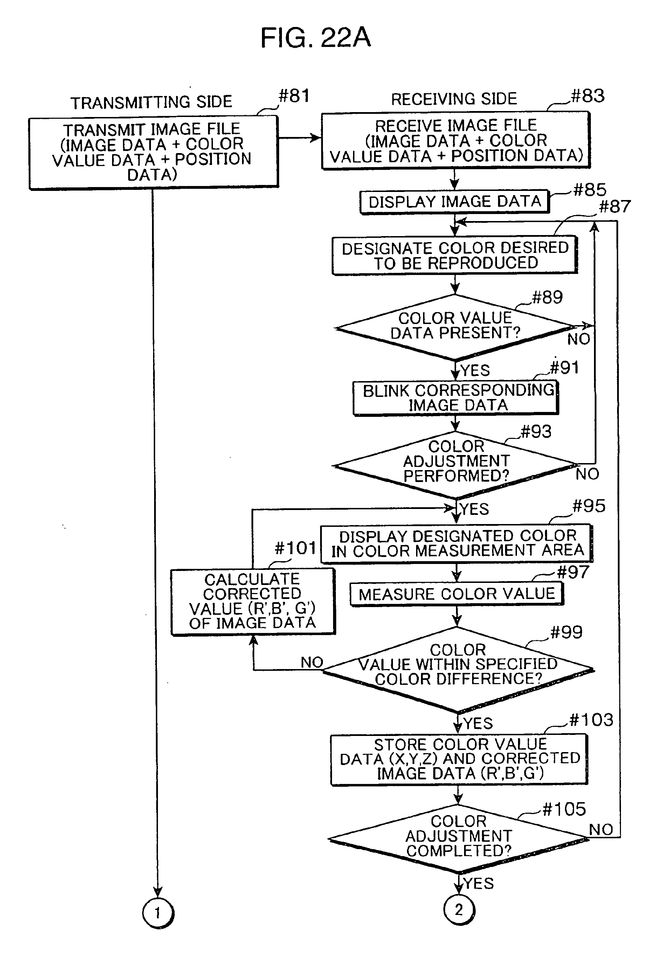

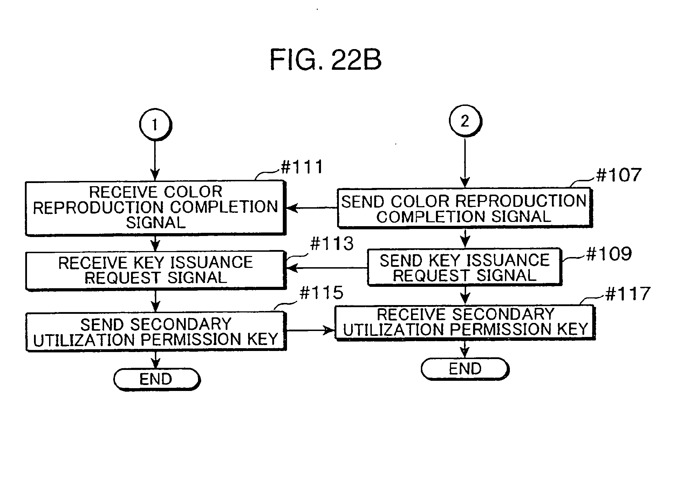

FIGS. 22A and 22B combinedly show a first procedure of transmitting the image information in the image information transmission system shown in FIG. 20 or 21.

The transmission procedure shown in FIGS. 22A and 22B is such that the image file including the image data, color value data and position data is transmitted to the image information receiver while prohibiting a secondary utilization, and the secondary utilization is enabled by obtaining a secondary utilization permission key from the image information transmitter if the secondary utilization of the image file is desired in the image information receiver. Thus, the received image file can be reproduced on the display in colors intended by the image creator in the image information receiver, but the secondary utilization such as storage of the image file and transfer thereof to an other image information receiver cannot be made unless the secondary utilization permission key is obtained.

First, upon a request of an image information from the image information receiver to the image information transmitter, an image file including an image data (RGB data), a color value data (XZY data) and a position data (xy data) is transmitted from the image information transmitter to the image information receiver (Step #81).

Upon receiving the image file (Step #83), the image information receiver displays an image in the display area AR5 of the image viewer 22a on the display 22 using the image data (R, G, B) (Step #85). When a color desired to be reproduced in the image information receiver is designated by means of the cursor K (Step #87), it is discriminated whether the designated color is a registered color having a color value data using the position data of the registered colors transmitted from the image information transmitter (Step #89). If the designated color is a registered color (YES in Step #89), the designated position or the registration area of the corresponding registered color is blinked or the area frame is accentuated so as to make it known that the designated color is a registered color (Step #91). Unless the designated color is a registered color (NO in Step #89), a change such as blinking display or accentuated display is not seen in the image in the image viewer 22a. Thus, a user of the image information receiver understands that the designated color is not a registered color and designates an other color desired to be reproduced (Step #87).

In the case that one of a plurality of registered colors displayed in the display area AR8 of the registration palette 22b is designated by means of the cursor K, the discrimination result is always affirmative in Step #89 since the designated color is a registered color and Step #91 follows.

If it is confirmed that the designated color is a registered color having a color value data in Step #91, it is discriminated whether color adjustment is to be made for the designated color (Step #93). If color adjustment is to be made (YES in step #93), the color at the designated position is displayed in the display area AR7 of the registration palette 22b on the display 22 (Step #95) and this displayed color is measured by the colorimeter 25 (Step #97).

Then, a color value data (X₀, Y₀, Z₀) obtained by the colorimeter 25 and the color value data (X_{c}, Y_{c}, Z_{c}) included in the image file are compared. Unless a color difference between the two data lies within a specified range (NO in Step #99), the image data (R, G, B) is corrected into a specified image data (R', G', B') (Step #101) and this routine returns to Step #95 to correct the image data so that the color value data actually measured by the Newton-Raphson method substantially coincides with the color value data (X_{c}, Y_{c}, Z_{c}) transmitted from the image information transmitter (loop of Steps #95 to #101).

When the correction of the image data (R, G, B), i.e., the color adjustment of the designated color is completed (YES in Step #99), a data (LUT data) representing a correspondence between the color value data (X_{c}, Y_{c}, Z_{c}) and the image data after correction (R", G", B") is stored in the image data storage of the image information receiver (Step #103).

Subsequently, it is discriminated whether the end of the color adjustment has been instructed (Step #105). Unless such an instruction has been given (NO in Step #105), this routine returns to Step #87 and color adjustment for the color at an other position is made (loop of Steps #87 to #103). If the end of the color adjustment has been instructed (YES in Step #105), a color reproduction completion signal is send from the image information receiver to the image information transmitter (Steps #107, #111). This signal is sent to inform the image information transmitter that the reproduction of the image file has been completed in the image information receiver, so that the result of the color reproduction at the image information receiver can be grasped at the image information transmitter.

Subsequently, when a signal requesting the issuance of the secondary utilization permission key is transmitted from the image information receiver to the image information transmitter if necessary (Steps #109, #113), the secondary utilization permission key is transmitted from the image information transmitter to the image information receiver (Steps #115, #117), thereby completing the transmission of the image information.

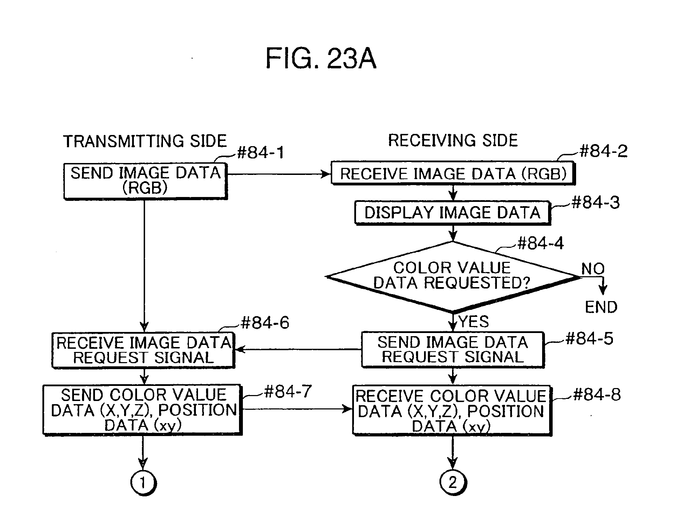

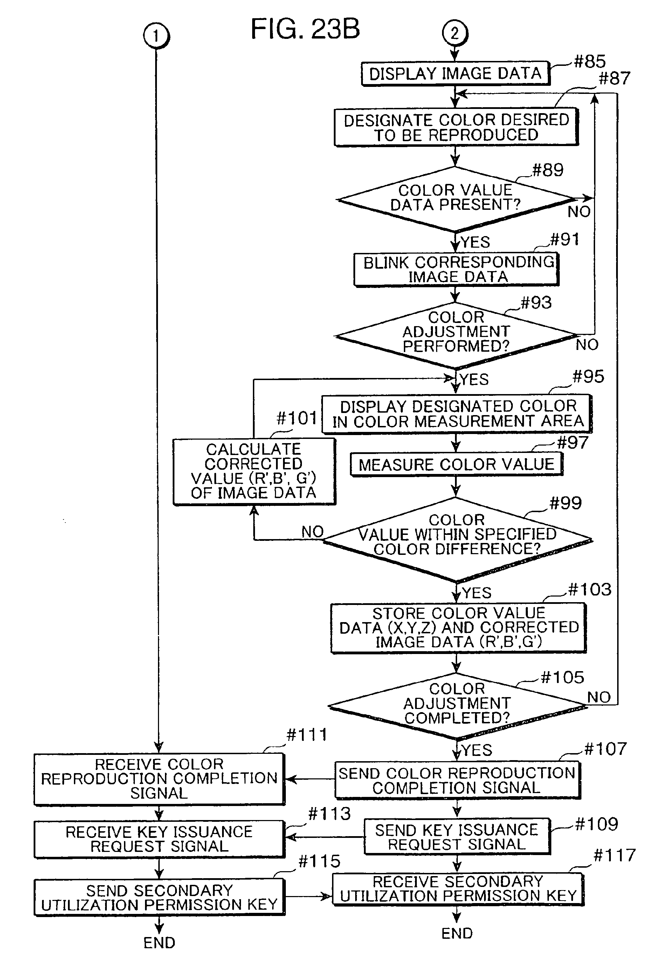

FIGS. 23A and 23B combinedly show a second procedure of transmitting the image information in the image information transmission system shown in FIG. 20 or 21.

The transmission procedure shown in FIGS. 23A and 23B is such that only the image data (R, G, B) is first transmitted from the image information transmitter to the image information receiver, and the image information receiver requests the image information transmitter to transmit all color value data in the case that color adjustment is wished to be made. In other words, a service enabling color adjustment is provided in the case that color adjustment is needed at the image information receiver.

Although the image data (R, G, B), the color value data (X, Y, Z) and the position data (x, y) are first transmitted in the transmission procedure of the image information shown in FIGS. 22A and 22B, the color value data and the position data are requested later at once in the transmission procedure of the image information shown in FIGS. 23A and 23B.

In the flowchart shown in FIGS. 23A and 23B, Steps #81, #83 of the flowchart shown in FIGS. 22A and 22B are replaced by Steps #84-1 to #84-8, and processings in these steps differ from the processing procedure of FIGS. 22A and 22B. Accordingly, only Steps #84-1 to #84-8 differing from the transmission procedure of the image information shown in FIGS. 22A and 22B are described below.

In the transmission procedure of the image information shown in FIGS. 23A and 23B, upon a request of the image information from the image information receiver to the image information transmitter, only the image data (RGB data) used to display the image on the display 22 is first transmitted from the image information transmitter to the image information receiver (Step #84-1). Upon receiving the image data (Step #84-2), the image information receiver displays the image in the image view 22a on the display 22 using the received image data (Step #84-3).

It is then discriminated whether the color value data has been requested (i.e., whether color adjustment has been instructed) (Step #84-4), and the image file display processing is ended if there is no request for the color value data (NO in Step #84-4).

On the other hand, if there is a request of the color value data (YES in Step #84-4), a color value data request signal is transmitted from the image information receiver to the image information transmitter (Steps #84-5, #84-6), and the color value data (X, Y, Z) and the position data (x, y) corresponding to the already transmitted image data are accordingly transmitted from the image information transmitter to the image information receiver (Steps #84-7, #84-8). When a color desired to be reproduced in the image information receiver is designated by means of the cursor K (Step #87), it is discriminated whether the designated color is a registered color having a color value data using the position data of the registered colors transmitted from the image information transmitter (Step #89). Hereafter, operations after Step #89 described with reference to FIGS. 22A and 22B are performed.

Since all the color value data and all the position data are requested at once in the second processing procedure of the image information, if the number of colors to adjusted for the received image are large, there is an advantage of more quickly performing the color adjustment as compared to a third procedure to be described later in which colors desired to be adjusted are requested one by one.

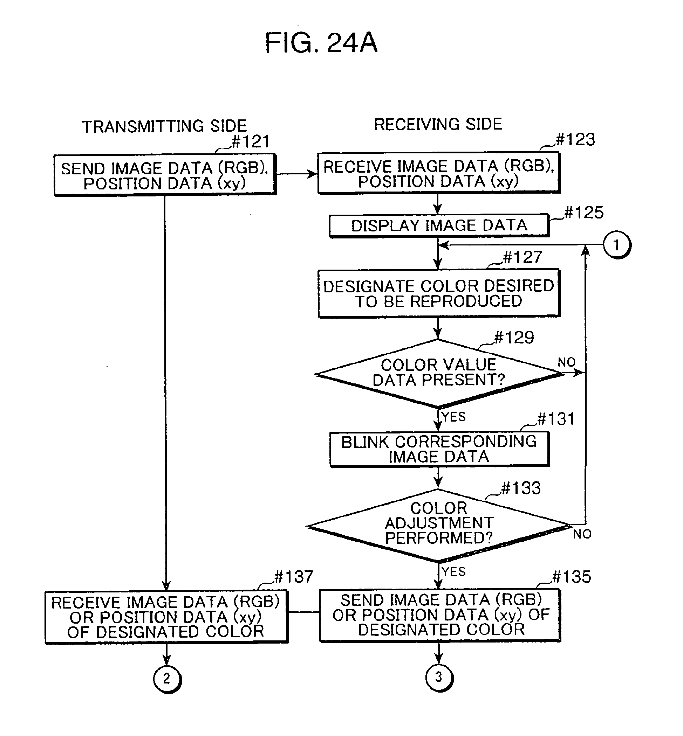

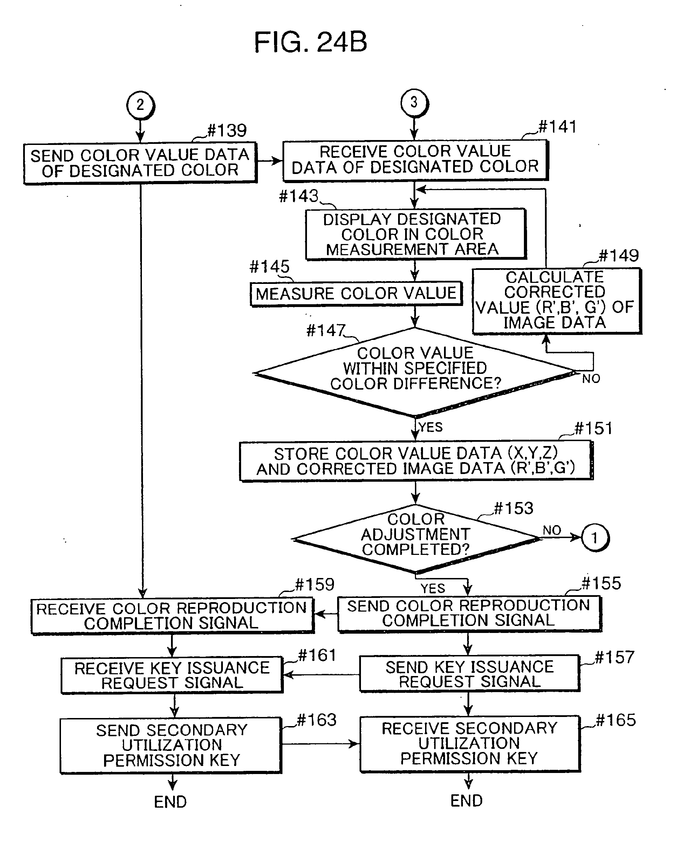

FIGS. 24A and 24B are flowcharts combinedly showing a third procedure of transmitting the image information in the image information transmission system shown in FIG. 20 or 21.

In the transmission procedure of the image information shown in FIGS. 24A and 24B, the image information transmitter transmits the color value data to the image information receiver when the color value data (X, Y, Z) of the color desired to be color-adjusted is requested by the image information receiver without transmitting the color value data (X, Y, Z) at first. In other words, a service enabling color adjustment only for the colors needed at the image information receiver is provided.

There are two methods for realizing the above transmission. The first method is such that the image information transmitter transmits the palette information of the colors (registered colors) having the color value data to the image information receiver together with the image data and lets a desired color be selected from the registered colors at the image information receiver. The second method is such that the image information transmitter transmits the position information of the registered colors without transmitting the color value information, the image information receiver requests the color value information of the registered color desired to be color-adjusted after confirming whether or not there is any color desired to be color-adjusted, and the image information transmitter transmits the color value data of this registered color to the image information receiver. In the flowchart shown in FIGS. 24A and 24B, the latter method is adopted.

Since a service charge can be collected every time color adjustment is made in the image information receiver according to the method for providing a service enabling color adjustment only for the color needed at the image information receiver, there is an advantage of providing a wider range of selection at a service-receiving side.

In the transmission procedure of the image information shown in FIGS. 24A and 24B, upon a request of the image information from the image information receiver to the image information transmitter, the image data (RGB data) used to display an image on the display 22 and the position data (xy data) of the registered color are transmitted from the image information transmitter to the image information receiver (Step #121). The image data and the position data are transmitted in order to enable color adjustment only for the color desired at the image information receiver.

Upon receiving the image data and the position data of the registered color (Step #123), the image is displayed in the image viewer 22a on the display 22 using the image data (Step #125). When the color desired to be reproduced in the image information receiver is designated by means of the cursor K (Step #127), it is discriminated whether the designated color is a registered color having a color value data using the position data of the registered colors transmitted from the image information transmitter (Step #129). If the designated color is a registered color (YES in Step #129), the designated position or the registration area of the corresponding registered color is blinked or the area frame is accentuated so as to make it known that the designated color is a registered color (Step #131). Unless the designated color is a registered color (NO in Step #129), a change such as blinking display or accentuated display is not seen in the image in the image viewer 22a. Thus, a user of the image information receiver understands that the designated color is not a registered color and designates an other color desired to be reproduced (Step #127).

If the designated color is confirmed to be a registered color having a color value data in Step #131, it is discriminated whether color adjustment is to be made for the designated color (Step #133). If color adjustment is to be made (YES in step #133), the image data (RGB data) used to display the designated color or the data (x, y) of the designated position is requested to the image information transmitter (Step #135). This position data or image data is transmitted in order to request the image information transmitter to transmit the color value data corresponding to these data. Unless color adjustment is to be made (NO in Step #133), an other color desired to be reproduced is designated (Step #127).

Upon receiving the position data or the image data (Step #137), the image information transmitter transmits the registered color value data (XYZ data) corresponding to the received position data or image data to the image information receiver (Step #139).

Upon receiving the color value data from the image information transmitter (Step #141), the image information receiver displays the color at the designated position in the display area AR7 of the registration palette 22b on the display 22 (Step #143) and this displayed color is measured by the colorimeter 25 (Step #145).

Then, a color value data (X₀, Y₀, Z₀) obtained by the colorimeter 25 and the color value data (X_{C}, Y_{C}, Z_{C}) transmitted from the image information transmitter are compared. Unless a color difference between the two data lies within a specified range (NO in Step #147), the image data (R, G, B) is corrected into a specified image data (R', G', B') (Step #149) and this routine returns to Step #143 to correct the image data so that the color value data actually measured by the Newton-Raphson method substantially coincides with the color value data (X_{c}, Y_{c}, Z_{c}) transmitted from the image information transmitter (loop of Steps #143 to #149).

When the correction of the image data (R, G, B), i.e., the color adjustment of the designated color is completed (YES in Step #147), a data (LUT data) representing a correspondence between the color value data (X_{c}, Y_{c}, Z_{c}) and the image data after correction (R", G", B") is stored in the image data storage of the image information receiver (Step #151).

Subsequently, it is discriminated whether the end of the color adjustment has been instructed (Step #153). Unless such an instruction has been given (NO in Step #153), this routine returns to Step #127 and color adjustment for the color at an other position is made (loop of Steps #127 to #151). If the end of the color adjustment has been instructed (YES in Step #153), the color reproduction completion signal is send from the image information receiver to the image information transmitter (Steps #155, #159).

Subsequently, when the signal requesting the issuance of the secondary utilization permission key is transmitted from the image information receiver to the image information transmitter if necessary (Steps #157, #161), the secondary utilization permission key is transmitted from the image information transmitter to the image information receiver (Steps #163, #165), thereby completing the transmission of the image information.

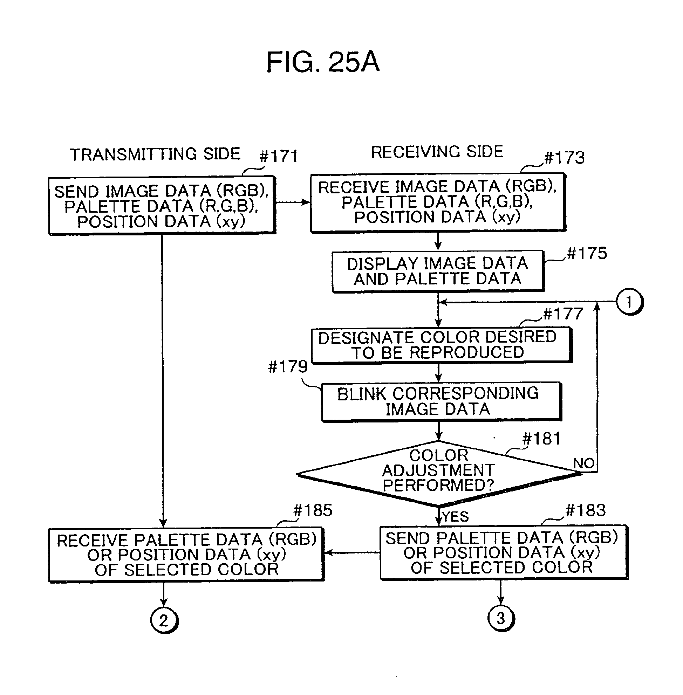

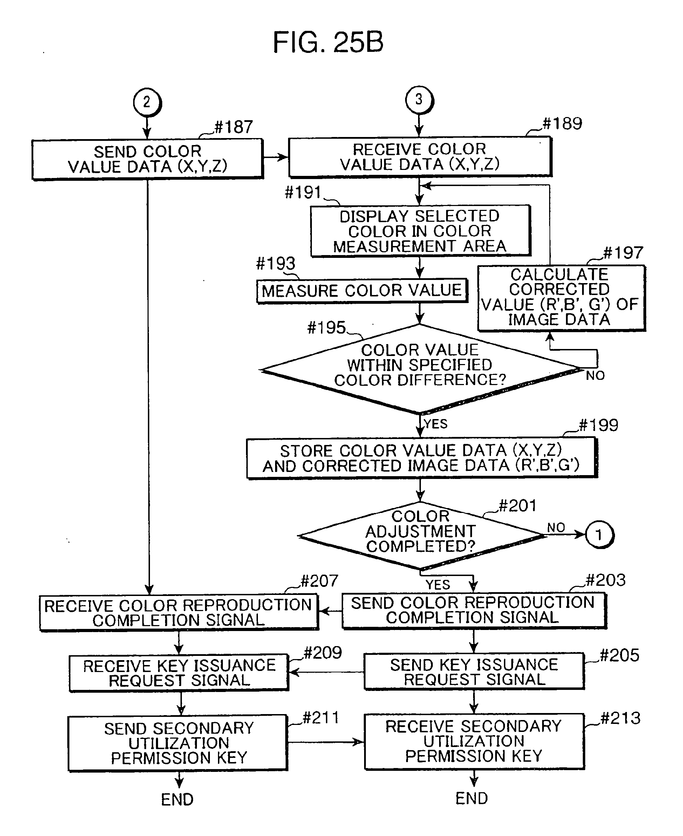

FIGS. 25A and 25B are flowcharts combinedly showing a fourth procedure of transmitting the image information in the image information transmission system shown in FIG. 20 or 21. This procedure corresponds to the former of the aforementioned two methods for providing the service enabling color adjustment only for the color needed at the image information receiver.

In the flowchart shown in FIGS. 25A and 25B, contents of processing in Steps #187 to #213 are the same as those in Steps 139 to #165 of the transmission procedure of the image information shown in FIGS. 24A and 24B. Accordingly, only Steps #171 to #185 differing from the transmission procedure of the image information shown in FIGS. 24A and 24B and relating Steps #187 to #199 are described below.

In the transmission procedure of the image information shown in FIGS. 25A and 25B, upon a request of the image information from the image information receiver to the image information transmitter, the image data (RGB data) used to display the image on the display 22, the color palette data (RGB data used to display the registered colors in palette format in the display area AR8 of the registration palette 22) having the color value data and the position data (x, y) of the colors having the color value data are transmitted from the image information transmitter to the image information receiver (Step #171). The image data is transmitted with the palette data attached thereto in order to enable a quick color adjustment at the image information receiver by informing the image information receiver of the colors having the color value data which colors can be color-adjusted.

Upon receiving the image data, the palette data and the position data (Step #173), the image information receiver displays the image in the image viewer 22a on the display 22 using the image data and displays the registered colors in palette format in the display area AR8 of the registration palette 22b using the palette data (Step #175).

When one of a plurality of registered colors displayed in palette format is designated in the image information receiver (Step #177), the designated position or the registration area in the image viewer 22b is blinked or the registration area is accentuated based on the position data corresponding to the designated registered color (Step #179). It is then discriminated whether the designated color has been selected as a color to be color-adjusted (Step #181). Unless this designated color has been selected (NO in Step #181), this routine returns to Step #177 to designate an other color desired to be reproduced.

On the other hand, if the designated color has been selected as a color to be color-adjusted (YES in Step #181), the palette data (R, G, B) or the position data (x, y) of the selected registered color is transmitted to the image information transmitter (Step #183). The palette data or the position data is transmitted in order to request the image information transmitter to transmit the color value data corresponding to the palette data or the position data.

Upon receiving the palette data or the position data, the image information transmitter transmits the color value data (X_{c}, Y_{c}, Z_{c}) in the image file corresponding to the palette data or the position to the image information receiver (Step #187).

Upon receiving the color value data (X_{c}, Y_{c}, Z_{c}) from the image information transmitter (Step #189), the image information receiver displays the selected registered color in the display area AR7 of the registration palette 22b on the display 22 (Step #191), and corrects the image data so that the color value data obtained by actually measuring this displayed color by means of the colorimeter 25 according to the Newton-Raphson method substantially coincides with the color value data (X_{c}, Y_{c}, Z_{c}) transmitted from the image information transmitter (loop of Steps #191 to #197).

When the correction of the image data (R, G, B) is completed (YES in Step #195), a data (LUT data) representing a correspondence between the color value data (X_{c}, Y_{c}, Z_{c}) and the image data after correction (R", G", B") is stored in the image data storage of the image information receiver (Step #199), thereby completing the color adjustment for the selected color.

As described above and according to an example provided for facilitating the understanding of the inventor, an image information transmitting method for transmitting an information on an image, comprising the steps of preparing an information on an image, the information including a first image data formed of color components used to output the image in an output medium, a second image data formed of color components of a color space enabling a measurement by means of a colorimeter for at least one color included in the image, and a data on a position or an area of the image where a color corresponding to the second image data is present. The image information is transmitted.

In this image information transmitting method, the second image data may be preferably a data obtained by actually measuring the image outputted in the output medium such as an electronic display device or an image forming apparatus by means of the colorimeter, a numerical data of colors set beforehand as color samples or a data obtained by actually measuring a color chart or specified color samples such as colors of an object sample. In the case of actually measuring the output image by means of the colorimeter, an information on the output medium for outputting the image may be included in the information on the image.

According to the above image information transmitting method, upon receipt of the information on the image via communication or an external storage medium, the image is reproduced by being displayed on an electronic display device using the first image data or by being outputted on a recording sheet by an image forming apparatus such as a printer. The color at a specified position or area of the image displayed on the electronic display device or outputted on the recording sheet is measured by means of the colorimeter based on the data on the position or the area, and a color displacement between the color of the reproduced image and that of the image at the time of creation can be known by comparing this measurement value (color value data) and the second image data corresponding to the measured color. Thus, the image having substantially the same color value as the color of the image at the time of creation can be reproduced by correcting the first image data based on the color displacement.

an according to a further example, image information generating unit comprises an image display portion for displaying an image, an image data storage portion for storing a first image data used to display the image on the image display portion, a color designator for designating at least one color within the image displayed on the image display portion, a position calculator for calculating a position data representing a position or an area in the image where the color designated by the color designator is present, an image data input portion for inputting a second image data formed of color components of a color space enabling a measurement by means of a colorimeter for the color designated by the color designator, and an image file generating portion for generating an image file by combining the first image data, the second image data and the position data.

The above image information generating unit may be further provided with an image file storage portion for storing the image file generated by the image file generating portion and/or a transmitting portion for transmitting the image file to an external device.

In the above image information generating unit, the image data input portion may preferably be provided with a color measurement portion for measuring color values of the image displayed on the image display portion, another color measurement portion for measuring color values of a color chart or specified color samples such as colors of an object sample, or a numerical data input portion for inputting a numerical data representing a color value of a specified color.

In the case of measuring the color of the image displayed on the image display portion, the image information generating unit may be provided with a color display portion for displaying the designated color in a specified size in a specified area of a display screen of the image display portion. In the case of measuring the color of the color sample, the image information generating unit may further comprise a data correcting portion for correcting the second image data measured by the color measurement portion so that the measurement specimen and the image displayed on the image display portion have a substantially equal degree of color adaptation (color appearance) which differs depending on observation conditions.

In this image information generating unit, the image is displayed on the image display portion using the first image data; when an arbitrary color within the displayed image is designated, the position or the area in the image where the designated color is present is calculated; and the second image data (e.g., XZY data of an XYZ color space) formed of the color components of the color space measurable by the colorimeter is inputted for the designated color. The second image data may be inputted, for example, by actually measuring the image displayed on the image display portion or a color chart or colors of an object sample or by directly inputting a numerical data representing the color value of a specified color. The image file is generated by combining the first image data, the second image data and the position data, and is stored in the image file storage portion or transmitted to an external device.

The above image information generating unit may be further provided with a color measurement position display portion for displaying a color measurement position or a color measurement area in the image displayed on the image display portion when the image file is generated by the image file generating portion. With this construction, the position or area in the image where the second image data was obtained can be confirmed. Also, the above image information generating unit may be further provided with a palette display portion for displaying colors possessing the second image data in palette format on the image display portion when the image file is generated by the image file generating portion. With this construction, the colors for which the second image data are already obtained can be confirmed by the palette display.

In the above image information generating unit, the information on the image may be further provided with an information on the image display portion. Further, the color designator may be constructed to enable designation of a plurality of colors at once, and the image information generating unit may comprise an image file generation control portion for successively generating image files for the respective designated colors by operating the position calculator, the image data input portion and the image file generating portion for each of the designated colors when the color designator designates a plurality of colors at once. With this construction, when a plurality of colors within the image displayed on the image display portion are designated at once, the image files are automatically generated one after another by operating the position calculator, the image data input portion and the image file generating portion for each of the designated colors.

According to a further example, a program causes a computer to function as an image display portion for displaying an image, an image data storage portion for storing a first image data used to display the image on the image display portion, a color designator for designating at least one color within the image displayed on the image display portion, a position calculator for calculating a position data representing a position or an area in the image where the color designated by the color designator is present, an image data input portion for inputting a second image data formed of color components of a color space enabling a measurement by means of a colorimeter for the color designated by the color designator, and an image file generating portion for generating an image file by combining the first image data, the second image data and the position data, and also to a computer-readable storage medium storing such a program.

According to a further example, an image information output unit comprises an image information input portion for inputting an information on an image including a first image data used to display the image on the image display portion, a second image data formed of color components of a color space enabling a measurement by means of a colorimeter for at least one color included in the image, and a data on a position or an area of the image where a color corresponding to the second image data is present, an image information storage portion for storing the information on the image inputted by the image information input portion, an image display portion for displaying the image using the first image data included in the information on the image, a color designator for designating a color possessing the second image data as a piece of the information on the image, a color measurement portion for measuring a color value of the color designated by the color designator which color is in the image displayed on the image display portion, and an image data correcting portion for comparing a color value data outputted from the color measurement portion and the second image data corresponding to the color value data and included in the information on the image and correcting the first image data included in the information on the image so that an error between the two data is equal to or smaller than a predetermined threshold value.

The image information output unit may be further provided with a data changing portion for changing the first image data included in the information on the image stored in the image information storage portion to a first image data obtained after correction by the image data correcting portion.

The image information output unit may be further provided with a palette display portion for displaying colors possessing the second image data in palette format on the image display portion based on the first image data included in the information on the image. Also, the image information output unit may be further provided with a color display portion for, when a color is designated by the color designator, displaying the designated color in a specified size in a specified area of a display screen of the image display portion for the color measurement of this color or a color measurement position display portion for displaying a position or an area where the designated color is present in the image displayed on the image display portion.

In the image information output unit, the image information input portion may include a receiving portion for receiving the information on the image transmitted via data communication and/or an information reading portion for reading the information on the image from an external storage medium storing such an information. Further, the color designator may designate one color from the colors displayed in palette format on the image display portion.

With this construction, when the information on the image is inputted via communication or an external storage medium, this information is stored in the image information storage portion, the image is displayed on the image display portion using the first image data, and the colors possessing the second image data in the information on the image are displayed in palette format on the image display portion.

When one color is designated from the colors displayed in palette format, the color value of this designated color displayed in the specified size (equal to or larger than a size measurable by the colorimeter) on the image display portion is measured by the color measurement portion. This color value data is compared with the second image data corresponding to the color value data and included in the information on the image, and the first image data included in the information on the image is corrected so that the error between the two data is equal to or smaller than the predetermined threshold value.

In this way, the designated color in the image displayed on the image display portion is so adjusted as to be substantially identical to the color of the image at the time of creation. Further, the first image data included in the information on the image stored in the image information storage portion is changed to the image data after correction, so that the colors possessing the second image data can be reproduced in the next image production while being adjusted to be substantially equal to those of the image at the time of creation.

The information on the image may further include an information on a display characteristic of an image display device for displaying the image based on the first image data, which information is used to correct the second image data, and the image information output unit may further comprise a data correcting portion for correcting the second image data included in the information on the image based on the information on the display characteristic of the image display device used at the time of generating the information on the image and the display characteristic of the image display portion so that the color appearance of the measured color displayed on the image display portion and that of the measured color outputted on the image display device are substantially equal.

The color designator may be constructed to enable designation of a plurality of colors at once, and the image information output unit may comprise an image data correction control portion for, when the information on the image inputted by the image information input portion includes the second image data and the position data for a plurality of colors and the color designator designates a plurality of colors at once, successively changing the first image data for the respective designated colors by operating the color measurement portion, the image data correcting portion and the data changing portion for each of the designated color. With this construction, when a plurality of colors within the image displayed on the image display portion are designated at once, the reproduced colors are automatically adjusted one after another by operating the position calculator, the image data input portion and the image file generating portion for each of the designated colors.

According to a further example, an image information output unit comprises an image information input portion for inputting an information on an image including a first image data used to display the image on an image display portion, a second image data formed of color components of a color space enabling a measurement by means of a colorimeter for at least one color included in the image, and a data on a position or an area in the image where a color corresponding to the second image data is present, an image information storage portion for storing the information on the image inputted by the image information input portion, an image display portion for displaying the image using the first image data included in the information on the image, a color measurement portion for measuring color values of the image displayed on the image display portion, an image data correcting portion for comparing a color value data outputted from the color measurement portion and the second image data corresponding to the color value data and included in the information on the image and correcting the first image data included in the information on the image so that an error between the two data is equal to or smaller than a predetermined threshold value, and an image data correction control portion for successively changing the first image data for each of all the colors possessing the second image data by operating the color measurement portion and the image data correcting portion.

With this construction, all the colors possessing the second image data and the position data in the information on the image inputted by the image information input portion are automatically adjusted one after another by operating the color measurement portion and the image data correcting portion for each of the colors.

According to a further example, another program causes a computer function as an image information input portion for inputting an information on an image including a first image data used to display the image on the image display portion, a second image data formed of color components of a color space enabling a measurement by means of a colorimeter for at least one color included in the image, and a data on a position or an area of the image where a color corresponding to the second image data is present, an image information storage portion for storing the information on the image inputted by the image information input portion, an image display portion for displaying the image using the first image data included in the information on the image, a color designator for designating a color possessing the second image data in the information on the image, a color measurement portion for measuring a color value of the color designated by the color designator which color is in the image displayed on the image display portion, and an image data correcting portion for comparing a color value data outputted from the color measurement portion and the second image data corresponding to the color value data and included in the information on the image and correcting the first image data included in the information on the image so that an error between the two data is equal to or smaller than a predetermined threshold value, and also to a computer-readable storage medium storing such a program.

According to a further example, an image information transmission system comprises the above-mentioned inventive image information generating unit provided with the transmitting portion for transmitting the image file to an external device, the above-mentioned inventive image information output unit provided with the receiving portion for receiving the information transmitted via data communication, and a connection portion for connecting the image information generating unit and the image information output unit in such a manner as to enable a communication therebetween. In this image information transmission system, the connection portion may be a communication network.

With this construction, the image file including the first and second image data and the position data and generated by the image information generating unit is transmitted to the image information output unit. In the image information output unit, the image is displayed on the image display portion using the first image data, when a specified color possessing the second image data is designated, the color value of this designated color is measured by the color measurement portion, and the color value data and the second image data are compared and the first image data is corrected so that an error between the two data is equal to or smaller than a predetermined threshold value. In this way, the designated color of the image is so adjusted as to have substantially the same color value as the one created by the image information generating unit.

In the above image information transmission system, the image information generating unit may transmit an information representing that the color value created in the image information generating unit could be reproduced to the image information generating unit. With this construction, the image information generating unit can confirm that the image file was reproduced in colors as intended by an image creator.

This application is based on patent application No. 2001-15046 filed in Japan.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds are therefore intended to embraced by the claims.

## Claims

1. A method for transmitting image information (F), comprising the steps of:
preparing said image information (F), wherein said image information comprises:
first image data (RGB DATA) formed of color components (RGB) used to output an image (G) to an output medium (12),
second image data (XYZ DATA) comprising at least one color value data (X, Y, Z) obtained by measuring by means of a colorimeter (15) at least one color included in the output on an output image (G) medium (12), and
data (xy DATA) on a position or an area of the image (G) where said at least one color corresponding to the second image data is present; and
transmitting said image information (F).

2. A method according to claim 1, wherein the output medium (12) includes an electronic display device.

3. A method according to claim 1, wherein the output medium (12) includes a medium of an image forming apparatus.

4. A method according to claim 2 or 3, wherein information on the output medium (12) is further prepared and transmitted.

5. A method according to claim 1, wherein the second image data further includes numerical data of colors set beforehand as color samples.

6. A method according to claim 1, wherein the second image data further includes data obtained by actually measuring a specified color sample by a colorimeter.

7. A method according to claim 6, wherein the color sample includes a color chart.

8. A method according to claim 6, wherein the color sample includes a color of an object sample.

9. An image information generating unit (10) comprising:
an image display portion (12) for displaying an image (G);
an image data storage portion (101) for storing first image data (RGB DATA) used to display an image (G) on the image display portion (12);
a color designator for designating at least one color within the image (G) displayed on the image display portion (12);
a position calculator (103c) for calculating position data representing a position or an area in the image (G) where the color designated by the color designator is present;
an image data input portion for inputting second image data comprising at least one color value data (X, Y, Z) obtained by measuring by means of a colorimeter at least the color designated by the color designator; and
an image file generating portion for generating an image file by combining the first image data, the second image data and the position data; further comprising
output means for outputting the image file generated by the image file generating portion.

10. An image information generating unit according to claim 9, wherein the output means comprises an image file storage portion for storing the image file generated by the image file generating portion.

11. An image information generating unit according to claim 9 or 10, wherein the output means comprises a transmitting portion for transmitting the image file to an external device.

12. An image information generating unit according to any one of claims 9 to 11, wherein the image data input portion includes a color measurement portion for measuring said color value of the image displayed on the image display portion.

13. An image information generating unit according to claim 12, further comprising a color display portion for displaying a designated color in a specified size in a specified area of the image display portion.

14. An image information generating unit according to any one of claims 9 to 11, wherein the image data input portion includes a color measurement device for measuring a color value of a specified color sample.

15. An image information generating unit according to claim 14, wherein the color sample includes a color chart.

16. An image information generating unit according to claim 14, wherein the color sample includes a color of an object sample.

17. An image information generating unit according to claim 15 or 16, further comprising a data correcting portion for correcting the second image data measured by the color measurement portion so that a measurement specimen and an image displayed on the image display portion have a
substantially equal degree of color adaptation which differs depending on observation conditions.

18. An image information generating unit according to any one of claims 9 to 11, wherein the image data input portion includes a numerical data input portion for inputting a numerical data representing a color value of a specified color.

19. An image information generating unit according to any one of claims 9 to 18, further comprising a color measurement position display portion for displaying a color measurement position or a color measurement area in an image displayed on the image display portion when an image file is generated by the image file generating portion.

20. An image information generating unit according to any one of claims 9 to 19, further comprising a palette display portion for displaying a color possessing the second image data in palette format on the image display portion when an image file is generated by the image file generating portion.

21. An image information generating unit according to any one of claims 9 to 20, wherein the information includes information on the image display portion.

22. An image information generating unit according to any one of claims 9 to 11, wherein the color designator is operable to designate a plurality of colors at once, further comprising an image file generation control portion for controlling the position calculator, the image data input portion and the image file generating portion for each of colors designated by the color designator so as to successively generate image files for the respective designated colors.

23. A program for causing a computer to function as an image information generating unit according to any of claims 9 to 22.

24. A computer-readable storage medium storing a program according to claim 23.

25. An image information output unit (20) comprising:
an image information input portion which inputs an information on an image, the information including:
first image data (RGB DATA) used to display the image (G) on an image display portion (22),
second image data (XYZ DATA) comprising at least one color value data obtained by measuring by means of a colorimeter at least one color included in the image (G) output on an output medium, and
data (xy DATA) on a position or an area of the image where said at least one color corresponding to the second image data (XYZ DATA) is present;
an image information storage portion (201) for storing the information inputted by the image information input portion;
an image display portion for displaying the image using the first image data included in the information;
a color designator for designating a color comprised in the second image data on the basis of said data on a position or an area;
a color measurement portion (25) for measuring a color value of the color designated by the color designator which color is in the image displayed on the image display portion; and
an image data correcting portion (203f) for comparing a color value data outputted from the color measurement portion and the second image data corresponding to the color value data and included in the information and correcting the first image data included in the information so that an error between the two data is equal to or smaller than a predetermined threshold value.

26. An image information output unit according to claim 25, further comprising a data changing portion for changing the first image data included in the information stored in the image information storage portion to a first image data obtained after correction by the image data correcting portion.

27. An image information output unit according to claim 25 or 26, wherein the image information input portion includes a receiving portion for receiving the information transmitted via data communication.

28. An image information output unit according to claim 25 or 26, wherein the image information input portion includes an information reading portion for reading the information from an external storage medium storing the information.

29. An image information output unit according to claim 25 or 26, further comprising a palette display portion for displaying a color possessing the second image data in palette format on the image display portion based on the first image data included in the information.

30. An image information output unit according to claim 29, wherein the color designator is for further designating one color from the colors displayed in palette format on the image display portion.

31. An image information output unit according to claim 25 or 26, further comprising a color display portion for displaying a designated color in a specified size in a specified area of the image display portion for the color measurement of the color.

32. An image information output unit according to claim 25 or 26, further comprising a color measurement position display portion for displaying a position or an area where a designated color is present in the image displayed on the image display portion.

33. An image information output unit according to claim 25 or 26, wherein the information further includes an information on a display characteristic of an image display device for displaying the image based on the first image data, further comprising a data correcting portion for correcting the second image data included in the image information based on the information on the display characteristic of the image display device used at the time of generating the image information and the display characteristic of the image display portion so that the color appearance of the measured color displayed on the image display portion and that of the measured color outputted on the image display device are substantially equal.

34. An image information output unit according to claim 25 or 26, wherein the color designator is operable to designate a plurality of colors at once, further comprising an image data correction control portion for controlling the color measurement portion, the image data correcting portion for each designated color so as to successively change the first image data for respective designated colors when the image information inputted by the image information input portion includes the second image data and the position data for a plurality of colors and the color designator designates a plurality of colors at once.

35. The image information output unit (20) according to claim 25, wherein
the color measurement portion is for further measuring color values of the image displayed on the image display portion; the image information output unit (20) further comprising:
an image data correction control portion which successively changes the first image data for each of all the colors possessing the second image data by operating the color measurement portion and the image data correcting portion.

36. A program for causing a computer function as an image information output unit according to any of claims 25 to 34.

37. A computer-readable storage medium storing a program according to claim 36.

38. An image information transmission system comprising:
an image information generating unit according to claim 9; an image information output unit according to claim 25; and
a connection portion which connects the image information generating unit and the image information output unit in such a manner as to enable a communication therebetween.

39. An image information transmission system according to claim 38, wherein the connection portion includes a communication network.

40. An image information transmission system according to claim 38 or 39, wherein the image information output unit transmits to the image information generating unit an information representing that a color value created in the image information generating unit is reproduced.

## Patentansprüche

1. Verfahren zum Übertragen von Bildinformationen (F), umfassend die Schritte:
Vorbereiten der Bildinformationen (F), wobei die Bildinformationen umfassen:
erste Bilddaten (RGB DATA), die aus Farbkomponenten (RGB) gebildet sind, die verwendet werden, um ein Bild (G) an ein Ausgabemedium (12) auszugeben;
zweite Bilddaten (XYZ DATA), die zumindest ein Farbwertdatum (X, Y, Z) umfassen, das durch Messen, mittels eines Colorimeters (15), zumindest einer in dem aus dem Ausgabemedium (12) ausgegebenen Bild (G) enthaltenen Farbe erhalten wird, und
Daten (xy DATA) zu einer Position oder einem Bereich des Bildes (G), wo die zumindest eine Farbe entsprechend den zweiten Bilddaten vorliegt; und
Übertragen der Bildinformationen (F).

2. Verfahren gemäß Anspruch 1, wobei das Ausgabemedium (12) eine elektronische Anzeigevorrichtung beinhaltet.

3. Verfahren gemäß Anspruch 1, wobei das Ausgabemedium (12) ein Medium einer Bildausbildungsvorrichtung beinhaltet.

4. Verfahren gemäß Anspruch 2 oder 3, wobei Informationen zum Ausgabemedium weiterhin vorbereitet und gesendet werden.

5. Verfahren gemäß Anspruch 1, wobei die zweiten Bilddaten weiterhin numerische Daten von vorab als Farbproben eingestellten Farben beinhalten.

6. Verfahren gemäß Anspruch 1, wobei die zweiten Bilddaten weiter durch tatsächliches Messen einer spezifischen Farbprobe durch ein Colorimeter erhaltene Daten beinhalten.

7. Verfahren gemäß Anspruch 6, wobei die Farbprobe eine Farbtabelle beinhaltet.

8. Verfahren gemäß Anspruch 6, wobei die Farbprobe eine Farbe einer Objektprobe beinhaltet.

9. Bildinformationserzeugungseinheit (10), umfassend:
einen Bildanzeigeteil (12) zum Anzeigen eines Bildes (G);
einen Bilddatenspeicherteil (101) zum Speichern erster Bilddaten (RGB DATA), die verwendet werden, um ein Bild (G) auf dem Bildanzeigebereich (12) anzuzeigen;
einen Farbdesignator zum Bezeichnen zumindest einer Farbe innerhalb des auf dem Bildanzeigeteil (12) angezeigten Bilds (G);
einen Positionsberechner (103c) zum Berechnen von Positionsdaten, die eine Position oder einen Bereich im Bild (G) repräsentieren, wo die durch den Farbdesignator bezeichnete Farbe vorhanden ist;
einen Bilddateneingabeteil zum Eingeben zweiter Bilddaten, umfassend zumindest ein Farbwertdatum (X, Y, Z), das durch Messen mittels eines Colorimeters zumindest einer durch den Farbdesignator bezeichneten Farbe erhalten wird; und
einen Bilddatei-Erzeugungsteil zum Erzeugen einer Bilddatei durch Kombinieren der ersten Bilddaten, der zweiten Bilddaten und der Positionsdaten; weiter umfassend
Ausgabemittel zum Ausgeben der durch den Bilddatei-Erzeugungsteil erzeugten Bilddatei.

10. Bildinformationserzeugungseinheit gemäß Anspruch 9, wobei das Ausgabemittel einen Bilddateispeicherteil zum Speichern der durch den Bilddatei-Erzeugungsteil erzeugten Bilddatei umfasst.

11. Bildinformationserzeugungseinheit gemäß Anspruch 9 oder 10, wobei das Ausgabemittel ein Sendeteil zum Senden der Bilddatei an eine externe Vorrichtung beinhaltet.

12. Bildinformationserzeugungseinheit gemäß einem der Ansprüche 9 bis 11, wobei der Bilddateneingabeteil einen Farbmessteil zum Messen des Farbwertes des auf dem Bildanzeigeteil angezeigten Bildes beinhaltet.

13. Bildinformationserzeugungseinheit gemäß Anspruch 12, weiter umfassend einen Farbanzeigteil zum Anzeigen einer bezeichneten Farbe in einer spezifizierten Größe in einem spezifizierten Bereich des Bildanzeigeteils.

14. Bildinformationserzeugungseinheit gemäß einem der Ansprüche 9 bis 11, wobei der Bilddaten-Eingabeteil eine Farbmessvorrichtung zum Messen eines Farbwerts einer spezifizierten Farbprobe beinhaltet.

15. Bildinformationserzeugungseinheit gemäß Anspruch 14, wobei die Farbprobe eine Farbtabelle beinhaltet.

16. Bildinformationserzeugungseinheit gemäß Anspruch 14, wobei die Farbprobe eine Farbe einer Objektprobe beinhaltet.

17. Bildinformationserzeugungseinheit gemäß Anspruch 15 oder 16, weiter umfassend einen Datenkorrekturteil zum Korrigieren von durch den Farbmessteil gemessenen zweiten Bilddaten, so dass ein Messprüfstück und ein auf dem Bildanzeigeteil angezeigtes Bild einen im Wesentlichen gleichen Grad an Farbadaption aufweisen, der abhängig von Beobachtungsbedingungen differiert.

18. Bildinformationserzeugungseinheit gemäß einem der Ansprüche 9 bis 11, wobei der Bilddaten-Eingabeteil einen numerischen Dateneingabeteil zum Eingeben eines numerischen Datums beinhaltet, das einen Farbwert einer spezifizierten Farbe repräsentiert.

19. Bildinformationserzeugungseinheit gemäß einem der Ansprüche 9 bis 18, weiter umfassend einen Farbmesspositions-Anzeigeteil zum Anzeigen einer Farbmessposition oder eines Farbmessbereichs in einem auf dem Bildanzeigeteil angezeigten Bild, wenn eine Bilddatei durch den Bilddatei-Erzeugungsteil erzeugt wird.

20. Bildinformationserzeugungseinheit gemäß einem der Ansprüche 9 bis 19, weiter umfassend einen Paletten-Anzeigeteil zum Anzeigen einer Farbe, die die zweiten Bilddaten im Palettenformat besitzt, auf dem Bildanzeigeteil, wenn eine Bilddatei durch den Bilddatei-Erzeugungsteil erzeugt wird.

21. Bildinformationserzeugungseinheit gemäß einem der Ansprüche 9 bis 20, wobei die Information Informationen zum Bildanzeigeteil beinhalten.

22. Bildinformationserzeugungseinheit gemäß einem der Ansprüche 9 bis 11, wobei der Farbdesignator betreibbar ist, eine Mehrzahl von Farben gleichzeitig zu bezeichnen, weiter umfassend einen Bilddatei-Erzeugungssteuerteil zum Steuern des Positionsberechners, des Bilddaten-Eingabeteils und des Bilddatei-Erzeugungsteils für jede der durch den Farbdesignator bezeichneten Farben, um so sukzessive Bilddateien für die jeweiligen, bezeichneten Farben zu erzeugen.

23. Programm zum Veranlassen eines Computers, als eine Bildinformationserzeugungseinheit gemäß einem der Ansprüche 9 bis 22 zu funktionieren.

24. Computerlesbares Speichermittel, das ein Programm gemäß Anspruch 23 speichert.

25. Bildinformationsausgabeeinheit (25), umfassend:
einen Bildinformationseingabeteil, der eine Information zu einem Bild eingibt, wobei die Information beinhaltet:
erste Bilddaten (RGB DATA), verwendet zur Anzeige des Bildes (G) auf einem Bildanzeigeteil (22),
zweite Bilddaten (XYZ DATA), die zumindest ein durch Messen mittels eines Colorimeters zumindest einer in dem auf einem Ausgabemedium ausgegebenen Bild (G) beinhalteten Farbe erhaltenes Farbwertdatum umfassen, und
Daten (xy DATA) zu einer Position und einem Bereich des Bildes, wo die zumindest eine Farbe entsprechend den zweiten Bilddaten (XYZ DATA) vorhanden ist;
einen Bildinformationsspeicherteil (201) zum Speichern der durch den Bildinformationseingabeteil eingegebenen Informationen;
einen Bildanzeigeteil zum Anzeigen des Bilds unter Verwendung der in den Informationen beinhalteten ersten Bilddaten;
einen Farbdesignator zum Bezeichnen einer in den zweiten Bilddaten umfassten Farbe auf Basis der Daten zu einer Position und einem Bereich;
einen Farbmessteil (25) zum Messen eines Farbwerts der durch den Farbdesignator bezeichneten Farbe, welche Farbe im auf dem Bildanzeigeteil angezeigten Bild ist; und
einen Bilddaten-Korrekturteil (203f) zum Vergleichen von aus dem Farbmessteil ausgegebenen Farbwertdaten mit den, den Farbwertdaten entsprechenden und in den Informationen beinhalteten zweiten Bilddaten, und Korrigieren der in den Informationen beinhalteten ersten Bilddaten, so dass ein Fehler zwischen den zwei Daten gleich oder kleiner einem vorgegebenen Schwellenwert ist.

26. Bildinformationsausgabeeinheit gemäß Anspruch 25, weiter umfassend einen Datenänderungsteil zum Ändern der in den im Bildinformationsspeicherteil gespeicherten Informationen beinhalteten ersten Bilddaten zu ersten Bilddaten, die nach Korrektur durch den Bilddaten-Korrekturteil erhalten sind.

27. Bildinformationsausgabeeinheit gemäß Anspruch 25 oder 26, wobei der Bildinformationseingabeteil einen Empfangsteil zum Empfangen der über Datenkommunikation gesendeten Informationen beinhaltet.

28. Bildinformationsausgabeeinheit gemäß Anspruch 25 oder 26, wobei der Bildinformationseingabeteil einen Informationsleseteil zum Einlesen der Informationen aus dem die Informationen speichernden externen Speichermedium beinhaltet.

29. Bildinformationsausgabeeinheit gemäß Anspruch 25 oder 26, weiter umfassend einen kompletten Anzeigeteil zum Anzeigen einer Farbe, welche die zweiten Bilddaten in Palettenformat besitzt, auf dem Bildanzeigeteil, basierend auf den in den Informationen beinhalteten ersten Bilddaten.

30. Bildinformationsausgabeeinheit gemäß Anspruch 29, wobei der Farbdesignator zum weiteren Bezeichnen einer Farbe aus den in Palettenformat auf dem Bildanzeigeteil angezeigten Farben dient.

31. Bildinformationsausgabeeinheit gemäß Anspruch 25 oder 26, weiter umfassend einen Farbanzeigeteil zum Anzeigen einer bezeichneten Farbe in einer spezifizierten Größe in einem spezifizierten Bereich des Bildanzeigeteils für die Farbmessung der Farbe.

32. Bildinformationsausgabeeinheit gemäß Anspruch 25 oder 26, weiter umfassend einen Farbmesspositions-Anzeigeteil zum Anzeigen einer Position oder eines Bereichs, wo eine bezeichnete Farbe im auf dem Bildanzeigeteil angezeigten Bild vorhanden ist.

33. Bildinformationsausgabeeinheit gemäß Anspruch 25 oder 26, wobei die Informationen weiter Informationen zu einer Anzeige-Charakteristik einer Bildanzeigevorrichtung zum Anzeigen des Bildes, basierend auf den ersten Bilddaten, beinhalteen, weiter umfassend einen Datenkorrekturteil zum Korrigieren der in den Bildinformationen beinhalteten zweiten Bilddaten, basierend auf den Informationen zur Anzeige-Charakteristik der zum Zeitpunkt der Erzeugung der Bildinformationen verwendeten Bildanzeigevorrichtung und der Anzeige-Charakteristik des Bildanzeigeteils, so dass die Farbanmutung der gemessenen Farbe, die auf dem Bildanzeigeteil angezeigt wird, und diejenige der gemessenen Farbe, die aus der Bildanzeigevorrichtung ausgegeben wird, im Wesentlichen gleich sind.

34. Bildinformationsausgabeeinheit gemäß Anspruch 25 oder 26, wobei der Farbdesignator betreibbar ist, eine Mehrzahl von Farben auf einmal zu bezeichnen, weiter umfassend einen Bilddaten-Korrektursteuerteil zum Steuern des Farbmessteils, des Bilddaten-Korrekturteils für jede bezeichnete Farbe, um so sukzessive die ersten Bilddaten für entsprechend bezeichnete Farben zu ändern, wenn die durch den Bildinformationseingabeteil eingegebenen Bildinformationen die zweiten Bilddaten und die Positionsdaten für eine Mehrzahl von Farben beinhalten und der Farbdesignator eine Mehrzahl von Farben gleichzeitig bezeichnen.

35. Bildinformationsausgabeeinheit (20) gemäß Anspruch 25, wobei
der Farbmessteil dem weiteren Messen von Farbwerten des auf dem Bildanzeigeteil angezeigten Bildes dient; wobei die Bildinformationsausgabeeinheit (20) weiter umfasst: einen Bilddaten-Korrekturteil, der sukzessive die erste Bilddaten für jede all der Farben, die die zweiten Bilddaten besitzen, durch Betreiben des Farbmessteils und des Bilddaten-Korrekturteils verändert.

36. Programm, um einen Computer zu veranlassen, als eine Bildinformationsausgabeeinheit gemäß einem der Ansprüche 25 bis 34 zu dienen.

37. Computerlesbares Speichermedium, das ein Programm gemäß Anspruch 36 speichert.

38. Bildinformations-Sendesystem, umfassend:
eine Bildinformationserzeugungseinheit gemäß Anspruch 9; eine Bildinformationsausgabeeinheit gemäß Anspruch 25; und einen Verbindungsteil, der die
Bildinformationserzeugungseinheit und die Bildinformationsausgabeeinheit auf solche Weise verbindet, dass eine Kommunikation dazwischen ermöglicht wird.

39. Bildinformations-Sendesystem gemäß Anspruch 38, wobei der Verbindungsteil ein Kommunikationsnetzwerk beinhaltet.

40. Bildinformations-Sendesystem gemäß Anspruch 38 oder 39, wobei die Bildinformationsausgabeeinheit an die Bildinformationserzeugungseinheit Informationen sendet, welche repräsentieren, dass ein in der Bildinformationserzeugungseinheit erzeugter Farbwert reproduziert wird.

## Revendications

1. Procédé pour transmettre des informations d'image (F), comprenant les étapes consistant à :
préparer lesdites informations d'image (F), lesdites informations d'image comprennant :
des premières données d'image (DONNÉES RGB) formées de composantes de couleurs (RGB) utilisées pour sortir une image (G) vers un support de sortie (12),
des secondes données d'image (DONNÉES XYZ) comprenant au moins une donnée de valeur de couleur (X, Y, Z) obtenue en mesurant au moyen d'un colorimètre (15) au moins une couleur incluse dans l'image (G) sortie sur un support de sortie (12), et
des données (DONNÉES xy) sur une position ou une zone de l'image (G) où ladite au moins une couleur correspondant aux secondes données d'image est présente ; et
transmettre lesdites informations d'image (F).

2. Procédé selon la revendication 1, dans lequel le support de sortie (12) inclut un dispositif d'affichage électronique.

3. Procédé selon la revendication 1, dans lequel le support de sortie (12) inclut un support d'un appareil de formation d'image.

4. Procédé selon la revendication 2 ou 3, dans lequel des informations sur le support de sortie (12) sont en outre préparées et transmises.

5. Procédé selon la revendication 1, dans lequel les secondes données d'image incluent en outre des données numériques de couleurs fixées à l'avance en tant qu'échantillons de couleurs.

6. Procédé selon la revendication 1, dans lequel les secondes données d'image incluent en outre des données obtenues en mesurant en réalité un échantillon de couleur spécifiée par un colorimètre.

7. Procédé selon la revendication 6, dans lequel l'échantillon de couleur inclut un diagramme de couleurs.

8. Procédé selon la revendication 6, dans lequel l'échantillon de couleur inclut une couleur d'un échantillon d'objet.

9. Unité générant de l'information d'image (10) comprenant :
une partie d'affichage d'image (12) pour afficher une image (G) ;
une partie de stockage de données d'image (101) pour stocker des premières données d'image (DONNÉES RGB) utilisées pour afficher une image (G) sur la partie d'affichage d'image (12) ;
un indicateur de couleur pour désigner au moins une couleur à l'intérieur de l'image (G) affichée sur la partie d'affichage d'image (12) ;
un calculateur de position (103c) pour calculer des données de position représentant une position ou une zone dans l'image (G) où la couleur désignée par l'indicateur de couleur est présente ;
une partie d'entrée de données d'image pour entrer des secondes données d'image comprenant au moins une données de valeur de couleur (X, Y, Z) obtenue en mesurant au moyen d'un colorimètre au moins la couleur désignée par l'indicateur de couleur ; et
une partie générant un fichier d'image pour générer un fichier d'image en combinant les premières données d'image, les secondes données d'image et les données de position ; comprenant en outre un moyen de sortie pour sortir le fichier d'image généré par la partie générant un fichier d'image.

10. Unité générant de l'information d'image selon la revendication 9, dans laquelle le moyen de sortie comprend une partie de stockage de fichier d'image pour stocker le fichier d'image généré par la partie générant un fichier d'image.

11. Unité générant de l'information d'image selon la revendication 9 ou 10, dans laquelle le moyen de sortie comprend une partie de transmission pour transmettre le fichier d'image à un dispositif externe.

12. Unité générant de l'information d'image selon l'une quelconque des revendications 9 à 11, dans laquelle la partie d'entrée de données d'image inclut une partie de mesure de couleur pour mesurer ladite valeur de couleur de l'image affichée sur la partie d'affichage d'image.

13. Unité générant de l'information d'image selon la revendication 12, comprenant en outre une partie d'affichage de couleurs pour afficher une couleur désignée dans une taille spécifiée dans une zone spécifiée de la partie d'affichage d'image.

14. Unité générant de l'information d'image selon l'une quelconque des revendications 9 à 11, dans laquelle la partie d'entrée de données d'image inclut un dispositif de mesure de couleur pour mesurer une valeur de couleur d'un échantillon de couleur spécifiée.

15. Unité générant de l'information d'image selon la revendication 14, dans laquelle l'échantillon de couleur inclut un diagramme de couleurs.

16. Unité générant de l'information d'image selon la revendication 14, dans laquelle l'échantillon de couleur inclut une couleur d'un échantillon d'objet.

17. Unité générant de l'information d'image selon la revendication 15 ou 16, comprenant en outre une partie de correction de données pour corriger les secondes données d'image mesurées par la partie de mesure de couleurs de sorte qu'un spécimen de mesure et une image affichée sur la partie d'affichage d'image ont un degré d'adaptation de couleur sensiblement égal qui diffère en fonction des conditions d'observation.

18. Unité générant de l'information d'image selon l'une quelconque des revendications 9 à 11, dans laquelle la partie d'entrée de données d'image inclut une partie d'entrée de données numériques pour entrer des données numériques représentant une valeur de couleur d'une couleur spécifiée.

19. Unité générant de l'information d'image selon l'une quelconque des revendications 9 à 18, comprenant en outre une partie d'affichage de position de mesure de couleurs pour afficher une position de mesure de couleurs ou une zone de mesure de couleurs dans une image affichée sur la partie d'affichage d'image quand un fichier d'image est généré par la partie générant un fichier d'image.

20. Unité générant de l'information d'image selon l'une quelconque des revendications 9 à 19, comprenant en outre une partie d'affichage de palette pour afficher une couleur possédant les secondes données d'image dans un format de palette sur la partie d'affichage d'image quand un fichier d'image est généré par la partie générant un fichier d'image.

21. Unité générant de l'information d'image selon l'une quelconque des revendications 9 à 20, dans laquelle les informations incluent des informations concernant la partie d'affichage d'image.

22. Unité générant de l'information d'image selon l'une quelconque des revendications 9 à 11, dans laquelle l'indicateur de couleur peut être mis en oeuvre pour désigner une pluralité de couleurs à la fois, comprenant en outre une partie de commande de génération de fichier d'image pour commander le calculateur de position, la partie d'entrée de données d'image et la partie générant un fichier d'image pour chacune des couleurs désignées par l'indicateur de couleurs de façon à successivement générer des fichiers d'image pour les couleurs désignées respectives.

23. Programme pour amener un ordinateur à fonctionner comme une unité générant de l'information d'image selon l'une quelconque des revendications 9 à 22.

24. Support de stockage lisible par ordinateur stockant un programme selon la revendication 23.

25. Unité de sortie d'information d'image (20) comprenant :
une partie d'entrée d'information d'image qui entre des informations concernant une image, les informations incluant :
des premières données d'image (DONNÉES RGB) utilisées pour afficher l'image (G) sur une partie d'affichage d'image (22),
des secondes données d'image (DONNÉES XYZ) comprenant au moins une donnée de valeur de couleur obtenue en mesurant au moyen d'un colorimètre au moins une couleur incluse dans l'image (G) sortie sur un support de sortie, et
des données (DONNÉES xy) sur une position ou une zone de l'image où ladite au moins une couleur correspondant aux secondes données d'image (DONNÉES XYZ) est présente ;
une partie de stockage d'informations d'image (201) pour stocker les informations entrées par la partie d'entrée d'information d'image ;
une partie d'affichage d'image pour afficher l'image en utilisant les premières données d'image incluses dans les informations ;
un indicateur de couleur pour désigner une couleur comprise dans les secondes données d'image sur la base desdites données sur une position ou une zone ;
une partie de mesure de couleurs (25) pour mesurer une valeur de couleur de la couleur désignée par l'indicateur de couleur, laquelle couleur est dans l'image affichée sur la partie d'affichage d'image ; et
une partie de correction de données d'image (203f) pour comparer une donnée de valeur de couleur sortie de la partie de mesure de couleurs et les secondes données d'image correspondant aux données de valeur de couleur et incluses dans les informations et pour corriger les premières données d'image incluses dans les informations de sorte qu'une erreur entre les deux données est égale ou inférieure à une valeur de seuil prédéterminée.

26. Unité de sortie d'information d'image selon la revendication 25, comprenant en outre une partie de changement de données pour changer les premières données d'image incluses dans les informations stockées dans la partie de stockage d'informations d'image pour des premières données d'image obtenues après correction par la partie de correction de données d'image.

27. Unité de sortie d'information d'image selon la revendication 25 ou 26, dans laquelle la partie d'entrée d'information d'image inclut une partie de réception pour recevoir les informations transmises par le biais d'une communication de données.

28. Unité de sortie d'information d'image selon la revendication 25 ou 26, dans laquelle la partie d'entrée d'information d'image inclut une partie de lecture d'informations pour lire les informations à partir d'un support de stockage externe stockant les informations.

29. Unité de sortie d'information d'image selon la revendication 25 ou 26, comprenant en outre une partie d'affichage de palette pour afficher une couleur possédant les secondes données d'image dans un format de palette sur la partie d'affichage d'image sur base des premières données d'image incluses dans les informations.

30. Unité de sortie d'information d'image selon la revendication 29, dans laquelle l'indicateur de couleur sert à désigner en outre une couleur parmi les couleurs affichées au format de palette sur la partie d'affichage d'image.

31. Unité de sortie d'information d'image selon la revendication 25 ou 26, comprenant en outre une partie d'affichage de couleurs pour afficher une couleur désignée dans une taille spécifiée dans une zone spécifiée de la partie d'affichage d'image pour la mesure de couleurs de la couleur.

32. Unité de sortie d'information d'image selon la revendication 25 ou 26, comprenant en outre une partie d'affichage de position de mesure de couleurs pour afficher une position ou une zone où une couleur désignée est présente dans l'image affichée sur la partie d'affichage d'image.

33. Unité de sortie d'information d'image selon la revendication 25 ou 26, dans laquelle les informations incluent en outre une information concernant une caractéristique d'affichage d'un dispositif d'affichage d'image pour afficher l'image sur base des premières données d'image, comprenant en outre une partie de correction de données pour corriger les secondes données d'image incluses dans les informations d'image sur base de l'information concernant la caractéristique d'affichage du dispositif d'affichage d'image utilisé au moment de la génération des informations d'image et la caractéristique d'affichage de la partie d'affichage d'image de sorte que l'apparence de couleur de la couleur mesurée affichée sur la partie d'affichage d'image et celle de la couleur mesurée sortie sur le dispositif d'affichage d'image sont sensiblement égales.

34. Unité de sortie d'information d'image selon la revendication 25 ou 26, dans laquelle l'indicateur de couleur peut être mis en oeuvre pour désigner une pluralité de couleurs à la fois, comprenant en outre une partie de commande de correction de données d'image pour commander la partie de mesure de couleurs, la partie de correction de données d'image pour chaque couleur désignée de façon à successivement changer les premières données d'image pour des couleurs désignées respectives quand les information d'image entrées par la partie d'entrée d'information d'image incluent les secondes données d'image et les données de position pour une pluralité de couleurs et l'indicateur de couleur désigne une pluralité de couleurs à la fois.

35. Unité de sortie d'information d'image (20) selon la revendication 25, dans laquelle
la partie de mesure de couleurs sert en outre à mesurer des valeurs de couleurs de l'image affichée sur la partie d'affichage d'image ;
l'unité de sortie d'information d'image (20) comprenant en outre :
une partie de commande de correction de données d'image qui change successivement les premières données d'image pour chacune de toutes les couleurs possédant les secondes données d'image en mettant en oeuvre la partie de mesure de couleurs et la partie de correction de données d'image.

36. Programme pour amener un ordinateur à fonctionner comme une unité de sortie d'information d'image selon l'une quelconque des revendications 25 à 34.

37. Support de stockage lisible par ordinateur stockant un programme selon la revendication 36.

38. Système de transmission d'informations d'image comprenant :
une unité générant de l'information d'image selon la revendication 9 ;
une unité de sortie d'information d'image selon la revendication 25 ; et
une partie de connexion qui relie l'unité générant de l'information d'image et l'unité de sortie d'information d'image de façon à permettre une communication entre celles-ci.

39. Système de transmission d'informations d'image selon la revendication 38, dans lequel la partie de connexion inclut un réseau de communication.

40. Système de transmission d'informations d'image selon la revendication 38 ou 39, dans lequel l'unité de sortie d'information d'image transmet à l'unité générant de l'information d'image une information représentant qu'une valeur de couleur créée dans l'unité générant de l'information d'image est reproduite.
